# EUROPEAN PATENT SPECIFICATION

(11) **EP 0 560 351 B1**
(45) Date of publication and mention of the grant of the patent: **29.12.1997**
(21) Application number: 93103920.0
(22) Date of filing: 11.03.1993
(51) Int. Cl.: B60K 28/04, A61B 5/18, B60R 16/02

(54) **Presence detecting and safety control apparatus**
Gerät zur Feststellung der Anwesenheit einer Person und Sicherheits-Steuerung
Appareil de détection de présence et de commande de sécurité

(30) Priority: 13.03.1992 JP 54847/92
(43) Date of publication of application: 15.09.1993
(73) Proprietor: MATSUSHITA ELECTRIC INDUSTRIAL CO., LTD., Kadoma-shi, Osaka-fu, 571 (JP); HONDA GIKEN KOGYO KABUSHIKI KAISHA, Minato-ku, Tokyo (JP)
(72) Inventor: Ogino, Hiroyuki, Nara-shi, Nara-ken (JP); Watanabe, Yoshiaki, Yamatokoriyama-shi, Nara-ken (JP); Shiba, Fumikazu, Nara-shi, Nara-ken (JP); Miki, Masayoshi, Nara-shi, Nara-ken (JP); Nagamoto, Shunichi, Nara-shi, Nara-ken (JP)
(74) Representative: Eisenführ, Speiser & Partner

(56) References cited:
- DE-A- 3 049 275
- DE-A- 3 248 179
- DE-A- 3 842 261
- GB-A- 2 150 725
- GB-A- 2 192 460
- US-A- 4 856 612
- PATENT ABSTRACTS OF JAPAN vol. 13, no. 306 (P-897) 13 July 1989 & JP-A-01 079 857 (FUJITSU LTD) 24 March 1989

## Description

### BACKGROUND OF THE INVENTION

The present invention generally relates to a safety control apparatus which is adapted to detect the presence, absence of sitters on the seats in a moving vehicle such as automobile, train, passenger plane or the like, the physiological mental state such as arousal level, tension degree or the like of the sitter so as to control the driving operation of the above described moving vehicle for maintaining the safety operation of the above described moving vehicle. Presence detecting means are known e.g. from GB-A-2 150 725, GB-A-2 192 460 and DE-A-3 842 261.

If the presence of the sitters can be detected, the empty seats of trains, passenger planes, buses and so on can be investigated in information so as to effect the operation control, or the unfastened condition of the seat belts can be warned. The solar heat accidents with respect to infants left behind within the compartment in the summer time can be prevented from occurring by the promotion of the air conditioning operation. The safety control operation can be effected if the physiological mental state such as arousal level, tension degree or the like of the sitters can be detected. For example, dozing over driving operation can be prevented, or the driving operation can be stopped by the detection of the abnormal physical and mental condition during the driving operation.

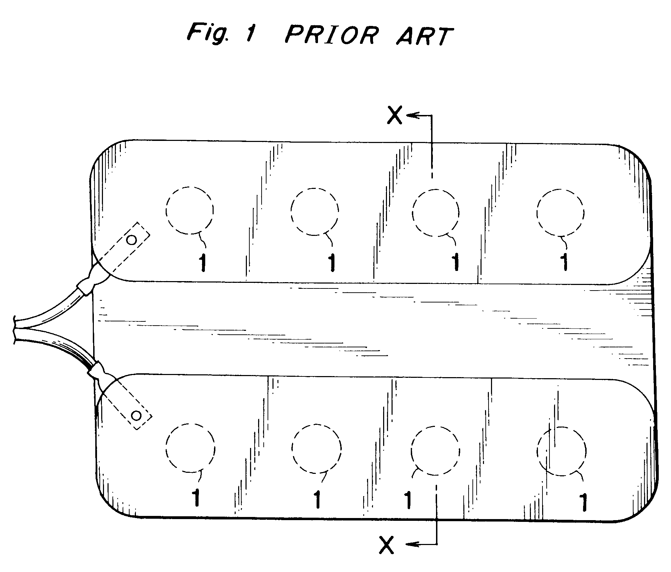

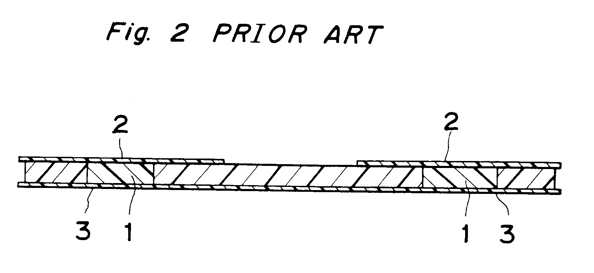

The conventional presence (hereinafter referred to as sitter present) detecting means in this type of safety control apparatus is shown hereinafter. In, for example, the U.S.P. at No. 3,859,485, the presence detecting means is composed as a seat switch with such pressure sensitive conductive material 1 being grasped between electrodes 2, 3 as shown in Fig. 1 and Fig. 2. Fig. 2 is a sectional view taken along a line X - X of Fig. 1. When the human body sits on the seat switch, the pressure by the physical weight is applied upon the pressure sensitive conductive material 1, the resistance value of the pressure sensitive conductive material 1 is lowered. In the construction, the electrodes 2, 3 become conductive so as to detect the presence of the human body. There is a problem in that the resistance value of the pressure sensitive conductive material 1 is lowered by the weight of an object even when the object is placed upon the seat switch so that the electrodes 2, 3 become conductive so as to effect the mistaken detection. The same problem is seen even in the presence detecting apparatus of, for example, GB. Pat. No. 2,201,820.

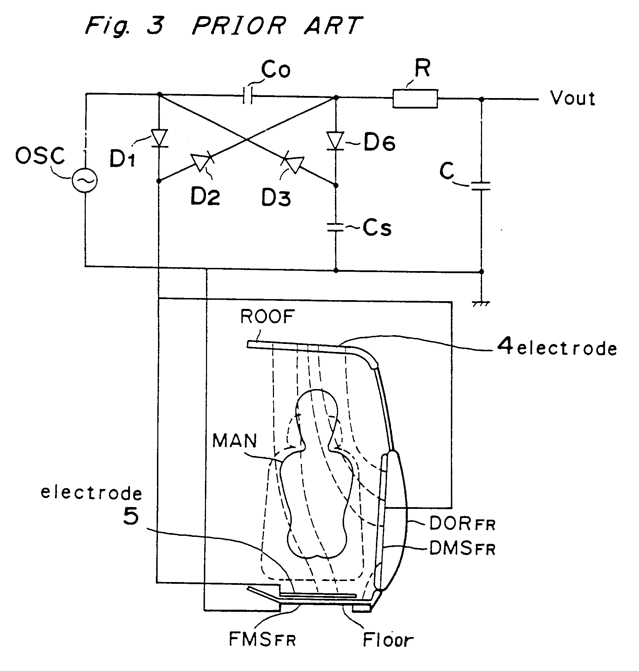

In, for example, the U.S. Pat. No. 4,796,013, an electrode 4 is set in the indoor roof, and an electrode 5 is set on the seat as shown in Fig. 3. Change in the electrostatic capacity of the capacitor to be formed with the electrodes 4, 5 is detected so as to detect the presence. In such construction, mistaken detections are effected, because the electrostatic capacity of the above described capacitor is changed if a person sitting on the next seat swings his arm over the seat with an electrode 5 being set in it.

In the conventional safety control apparatus, the seat sitter can not be detected with precise, with a problem that the error action is caused.

### SUMMARY OF THE INVENTION

Accordingly, the present invention has been developed with a view to substantially eliminating the above discussed drawbacks inherent in the prior art and has for a first object to provide an improved safety control apparatus for positively detecting the seat sitter of a person by the difference between a person and an object on the seat so as to maintain the safety operation of the vehicle.

A further object of the present invention is to provide an improved safety control apparatus which is adapted to detect the physiological mental state such as arousal level, tension degree or the like of the sitter so as to maintain the safety operation of the moving vehicle.

In order to achieve the above described first objects, the safety control apparatus of the present invention comprises the subject-matters defined in claim 1. Close physical movements by the activity of the heart and the breathing peculiar to the life activity of the human body from the output signal of the vibration sensor are detected so as to positively discriminate an object and a person for effecting the precise judgment of the presence. The safety operation of the moving vehicle is maintained by the stop of the moving vehicle start if the person is absent in accordance with the decision results.

In order to prevent, for example, train, passenger plane, buss and so on from being delayed, the present invention is provided with a seat reserving means for making reservations of the seats in the moving vehicle. The control means compares a seat reserving signal to be inputted from the above described seat reserving means with a presence signal to be inputted from the presence deciding means so as to maintain the safety operation of the moving vehicle by the stop of the moving vehicle start before the reserved seat becomes present.

The present invention is provided with a seat belt detecting means for detecting the engagement of the seat belt and a warning issuing means. When the seat belt is not engaged in spite of the presence detected, a warning is issued before the engagement of the seat belt is detected so as to stop the driving operation of the moving vehicle.

The present invention detects the close physical movements, with nonrestraint, by the heart activity and the breathing peculiar to the life activity of the human body. The vibration sensor is composed of a piezo-electric material, electrodes provided on both the faces of the above described piezo-electric material, a connecting terminal portion being connected with the above described electrode so as to guide the output signal of the above described electrode.

The present invention effects an impedance conversion of the output signals from the piezo-electric material in the impedance conversion portion connected adjacently to the guidance terminal portion.

The present invention is provided, in the outer block of a vibration sensor, with a shield portion so that the vibration sensor itself is hard to receive the influence of the noises.

In order to detect abnormalities of disconnection, shorts and so on of the vibration sensor, the vibration sensor is composed of a piezo-electric material, an electrode provided on both the faces of the above described piezoelectric material, a connecting terminal portion being connected with the above described electrode so as to guide the output signal of the above described electrode, a first resistor connected between the above described electrodes. The abnormality of the vibration sensor can be detected in accordance with the voltage value divided with a second resistor connected with one of the above described electrodes and the first resistor.

The present invention can judge the abnormality of the vibration sensor by the detection of the resistance value between the above described connecting terminal portions. The vibration sensor is provided with a piezo-electric material, electrodes provided on both the faces of the above described piezo electric material, and a connecting terminal portion provided on both the ends of the above described electrode electrodes.

In order to detect the abnormality of the vibration sensor, the present invention can detect the abnormality of the above described vibration sensor in accordance with the output signal of the physical movement characteristic detecting means at this time with the vibrations being applied upon the vibration sensor by the vibration applying means adjacently provided to the vibration sensor.

The present invention can detect the abnormality of the above described physical movement characteristic detecting means in accordance with the output signal of the above described physical movement characteristic detecting means at this time with the predetermined reference signal being inputted to the physical movement characteristic detecting means.

The present invention detects the close physical movements with the heart activity and the breathing peculiar to the life activity of the human body with the physical movement characteristic detecting means being composed of a filter for filtering only a specific frequency component of the output signal of the vibration sensor, an amplifier portion for amplifying the output signal of the above described filter, a smoothing portion for smoothing the output signals of the above described amplifying portion.

The presence detecting means is provided with a timer to be operated if the physical movement signal to be inputted from the physical movement characteristic detecting means is a predetermined set value or more, and a deciding portion which judges the sitter is present if a clocking signal to be inputted from the above described timer is a certain constant time or more, and judges the sitter is absent if the clocking signal is not the above described case.

The presence deciding means of the present invention is composed of a first deciding portion and a second deciding portion. The first deciding portion judges that the sitter is present if the physical movement signal to be inputted from the physical movement characteristic detecting means is a predetermined first set value or more and judges that the sitter is absent if it is not so. The second judgment portion retains the judgment of the absence before the above described physical movement signal becomes the predetermined second set value or more if the absence judgment is effected by the above described first deciding portion and judges whether or not the sitter is present in accordance with the above described first deciding portion when the above described physical movement signal becomes the above described second set value or more.

In order to raise the accuracy of the presence decision at the running time, the present invention is provided with a running speed detecting means for detecting the running speed of the vehicle. The presence deciding means calculates the set value for the presence decision in accordance with the running speed signal to be inputted from the above described running speed detecting means, and compares the physical signal to be inputted from the physical movement characteristic detecting means with the above described set value so as to judge the absence.

The physical movement characteristic detecting means of the present invention is provided with a plurality of filters portions for filtering a specific frequency component of the respective output signals of the vibration sensor in accordance with the fact that the respective resonance frequencies are different between person and thing. The presence deciding means judges whether the sitter is present in accordance with the plurality of output signals of the above described plurality of filters.

In order to achieve the above described objects, the safety control apparatus of the present invention has a physiological mental state deciding means for judging the physiological mental state such as arousal level, mental, physical tension degree and so on of the sitter in accordance with the physical movement signal to be inputted from the physical movement characteristic detecting means. The control means has a timer to which the presence signal is inputted from the presence deciding means, the control means is operated if the physiological mental state deciding signal to be inputted from the above described physiological mental state deciding means is a predetermined set value or lower, a driving control portion for stopping the driving operation of the driving means if the clocking signal of .the above described timer is a predetermined set time or more, and a warning generating means for generating the warning by the operation of the timer.

The physiological mental state deciding means is provided with a timer to be operated if a physical movement signal to be inputted from the physical movement characteristic detecting means is a predetermined set value or more, an arousal level deciding portion for judging the arousal level of the person present in accordance with the clocking signal to be inputted from the above described timer.

The physiological mental condition deciding means is provided with a heart pulse detecting portion for detecting the heart pulses of the present person in accordance with the physical movement signal to be inputted from the physical movement characteristic detecting means, and an arousal level deciding portion for judging the arousal level in accordance with the heart pulse signal to be inputted from the above described heart pulses detecting portion.

The physiological mental state deciding means of the present invention is provided with a computing portion for effecting the frequency analysis of the physical movement signals to be inputted from the physical movement characteristic detecting means, and a tension degree deciding portion for judging the mental and physical tension degree of the present person in accordance with the frequency analysis signal to be inputted from the above described calculating portion.

### BRIEF DESCRIPTION OF THE DRAWINGS

These and other objects and features of the present invention will become apparent from the following description taken in conjunction with the preferred embodiment thereof with reference to the accompanying drawings, in which;
Fig. 1 is an outer appearance view of the conventional presence detecting means;
Fig. 2 is a sectional view taken along a line X - X of Fig. 1;
Fig. 3 is an electric circuit block diagram of the conventional presence detecting means;
Fig. 4 is a block diagram of a safety control apparatus in a first embodiment of the present invention;
Fig. 5 is a perspective view of a vibration sensor of the same apparatus;
Fig. 6 is a sectional view of a vibration sensor of the same apparatus;
Fig. 7 is an equivalent circuit diagram showing the connection between the vibration sensor and a shield cable of the apparatus;
Fig. 8 is an output wave form view from the smoothing portion of the same apparatus;
Fig. 9 through Fig. 11 are a flow chart showing the control procedure of the same apparatus;
Fig. 12 is a block diagram in a second embodiment of the present invention;
Fig. 13 is a flow chart showing the procedure of the abnormal detection;
Fig. 14 is a block diagram in a third embodiment of the preset invention;
Fig. 15 is a flow chart showing the procedure of the abnormal detection;
Fig. 16 is a block diagram in a fourth embodiment of the present invention;
Fig. 17 is an output wave form chart from the smoothing portion in the abnormal detection;
Fig. 18 is a flow chart showing the procedure of the abnormality detection;
Fig. 19 is a block diagram in a fifth embodiment of the present invention;
Fig. 20 is a flow chart of the presence decision in the same embodiment;
Fig. 21 through Fig. 22 are views showing the output signal of the physical movement characteristic detecting means and the presence decision results in the stop · movement of a moving vehicle;
Fig. 23 is a block diagram in a sixth embodiment of the present invention;
Fig. 24 is a diagram showing the relationship between the running speed and the set value for presence decision;
Fig. 25 is a block diagram in a seventh embodiment of the present invention;
Fig. 26 graphically shows the frequency analysis result of the output signal from the vibration sensor;
Fig. 27 is a flow chart of the presence decision in the same embodiment;
Fig. 28 is a block diagram in an eighth embodiment of the present invention;
Fig. 29 is an output wave form chart from the physical movement characteristic detecting means in the same embodiment;
Fig. 30 is a graph showing the relationship between the clocking time of a first timer in the same embodiment, and the awakening level thereof;
Fig. 31 is a flow chart showing the control procedure in the same embodiment;
Fig. 32 is a graph showing between the heart pulse number and the awakening level;
Fig. 33 is a graph showing the relationship between the frequency analysis result of the output signal from the vibration sensor, and the tension degree thereof; and
Fig. 34 is a chart showing the relationship between the P2/P1 and the tension degree.

### DETAILED DESCRIPTION OF THE INVENTION

Before the description of the present invention proceeds, it is to be noted that like parts are designated by like reference numerals throughout the accompanying drawings.

A first embodiment of the present invention will be described in accordance with the accompanied drawings.

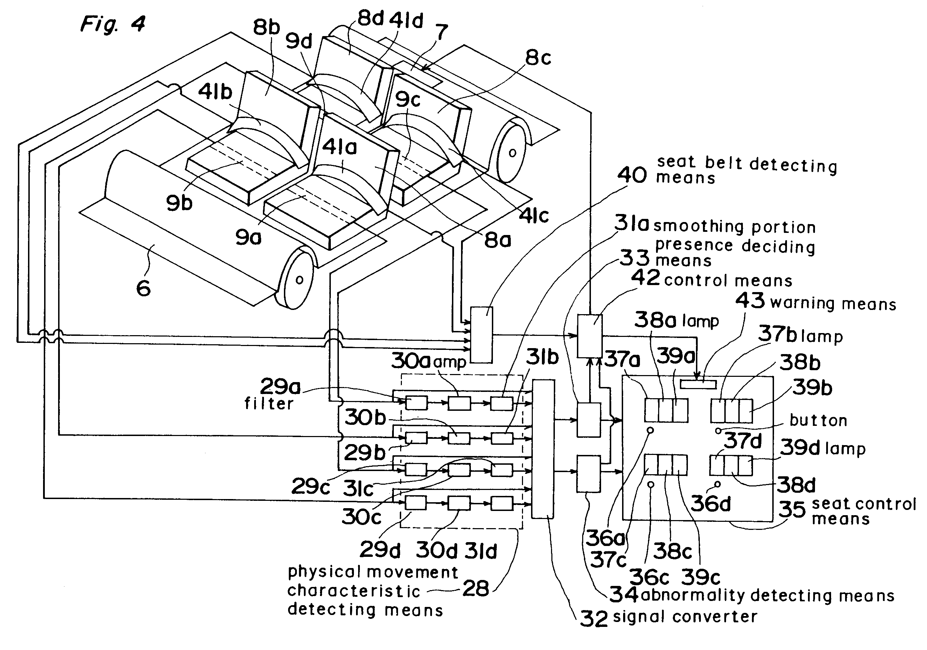

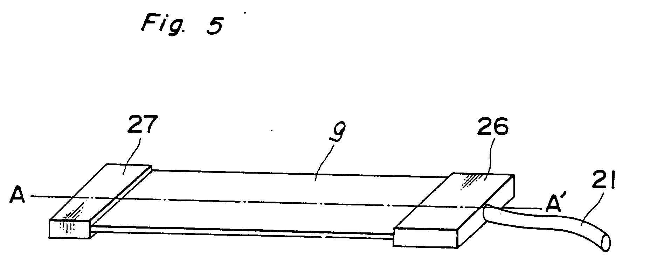

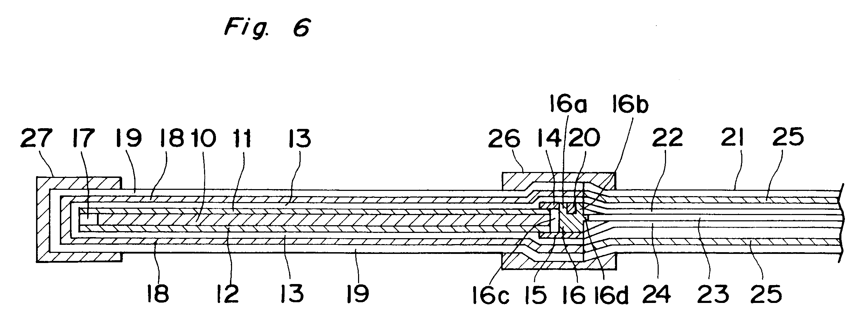

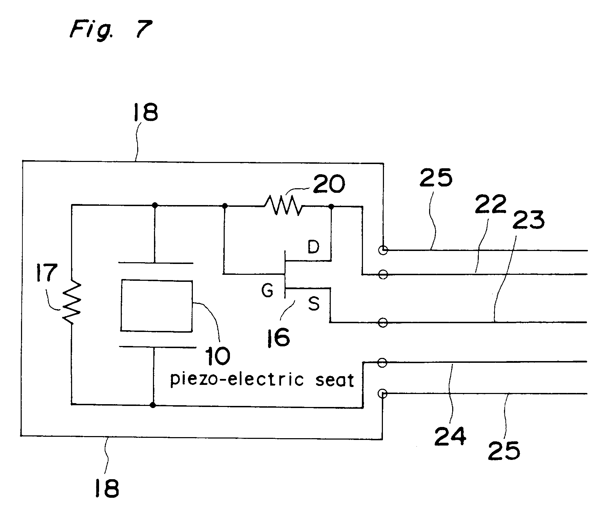

Fig. 4 is a block diagram in a first embodiment of the safety control apparatus of the present invention. Reference numeral 6 is a support member for having a human body placed so as to support it for its free moving operation. Reference numeral 7 is a driving means for moving the supporting member 6 with a power source. A plurality of seats 8a through 8d are set on the support member 6. Vibration sensors 9a through 9d are disposed on in the respective one portion of the respective seats. These vibration sensors are the same in construction. Fig. 5 is a perspective view of these vibration sensors. Fig. 6 is a sectional view taken along a line of A - A' of Fig. 5, The vibration sensor has flexible electrodes 11, 12 adhered on both the faces of the piezo-electric seat 10 with a macro-molecule piezo-electric material of vinylden polyfluoride (PVDF) or the like being made thin in film. The vibration sensor molded in a thin film shape with an insulation layer being provided on it with a polyester film 13. The respective electrodes are respectively connected with the connecting terminal portions 14, 15 for signal guidance use with one end portion thereof. The connecting terminal portion 14 is connected with the gate terminal 16a of the impedance conversion portion 16 using, for example, FET. A first resistor 17 for disconnection detecting use is connected with electrodes 11, 12 to another end portion. A shield layer 18 for cutting off the electric noises of the strong electric field is provided on the polyester film 13 with a polyester layer 19 for insulation use being further provided on it. A second resistor 20 is connected between the gate terminal 16a of the impedance conversion portion 16 and the drain terminal 16b. Reference numeral 16c is a gap for insulation. The drain terminal 16b, the source terminal 16d, the connecting terminal portion 15 and the shield layer 18 are connected in this order with the respective conductors 22, 23, 24 and a shield layer 25 of a shield cable 21 of a three wire system. Mold portions 26, 27 of the resin, for reinforcement against the impacts, are provided respectively on one end portion where the connecting terminal portions 14, 15, the impedance conversion portion 16 and the second resistor 20 are disposed, and on another end portion where the first resistor 17 is disposed. Fig. 7 shows an equivalent circuit diagram showing the connection between the vibration sensor 8a and the shield cable 21. Circle marks in the drawing are connection portions of both signal wires of the vibration sensor 8a and the shield cable 21 within the mold portion 26. The vibration sensors 9a through 9d are respectively disposed under the surface cloths of the seats 8a through 8d. Reference numeral 28 is a physical movement characteristic detecting means for detecting the physical movement characteristics in accordance with the life activity of the human body, which is provided with filers 29a through 29d for filtering a certain specific frequency component of the respective signals to be inputted from the vibration sensors 9a through 9d, amplification portions 30a through 30d for amplifying the filtered signals, smoothing portions 31a through 31d for smoothing the input signals. Reference numeral 32 is a signal converter, which effects an A / D conversion of voltage dividing signals between the first resistor 17 built in the vibration sensors 9a through 9d and a second resistor 20 corresponding to it, and signals to be inputted from the smoothing portions 31a through 31d. Reference numeral 33 is a presence deciding means for judging whether or not a human body is present by the seats 9a through 9d in accordance with a signal to be inputted from the signal converter 32. Reference numeral 34 is an abnormality detecting means for detecting the abnormalities of disconnections and shorts of the vibration sensors 9a through 9d and the shield cable 21 from the A / D conversion value of the above described voltage dividing signal. Reference numeral 35 is a seat control means for effecting the seat reservation, the control of the persons present and the display of something wrong with the apparatuses. Seats 8a through 8d corresponding to them are reserved by the depression of the reservation buttons 36a through 36d so as to light the corresponding reserved lamps 37a though 37d. The 38a through 38d are display lamps for displaying the decision results judged by the presence deciding means 33. The respective presence decision results of the seats 8a through 8d correspond to the light on condition of the display lamps 38a though 38d. Similarly, 39a through 39d are display lamps showing the existence of the abnormalities detected by the abnormality detecting means 34. Reference numeral 40 is a seat belt detecting means for detecting the engagement of the seat belts 41a through 41d. Reference numeral 42 is a control means for controlling the driving condition of a warning means 43 and a driving means 7 in accordance with the presence signal from the presence deciding means 33. The physical movement characteristic detecting means 28, the signal converting means 32, the presence deciding means 33, the abnormality detecting means 34, the seat belt detecting means 40, the control means 42 and so on are built in the unit box (not shown) electrically shield-processed.

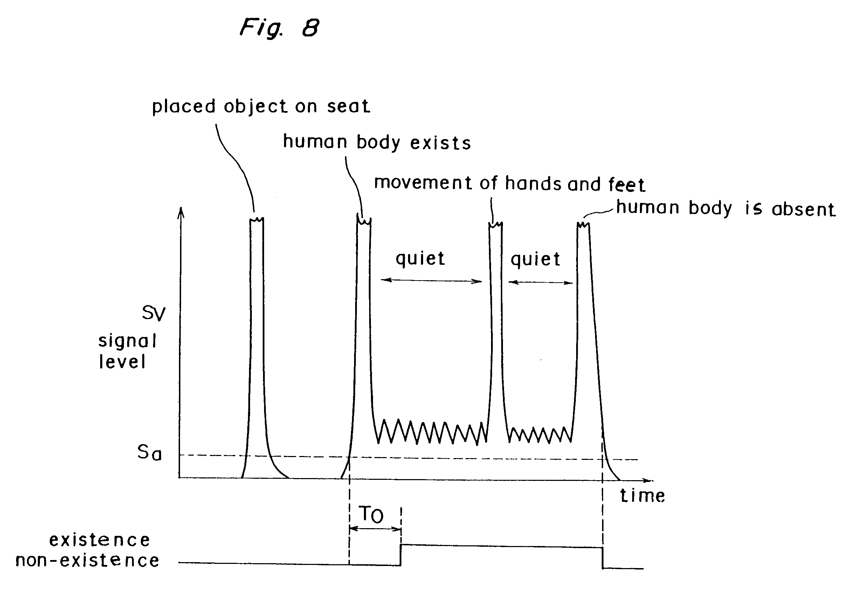

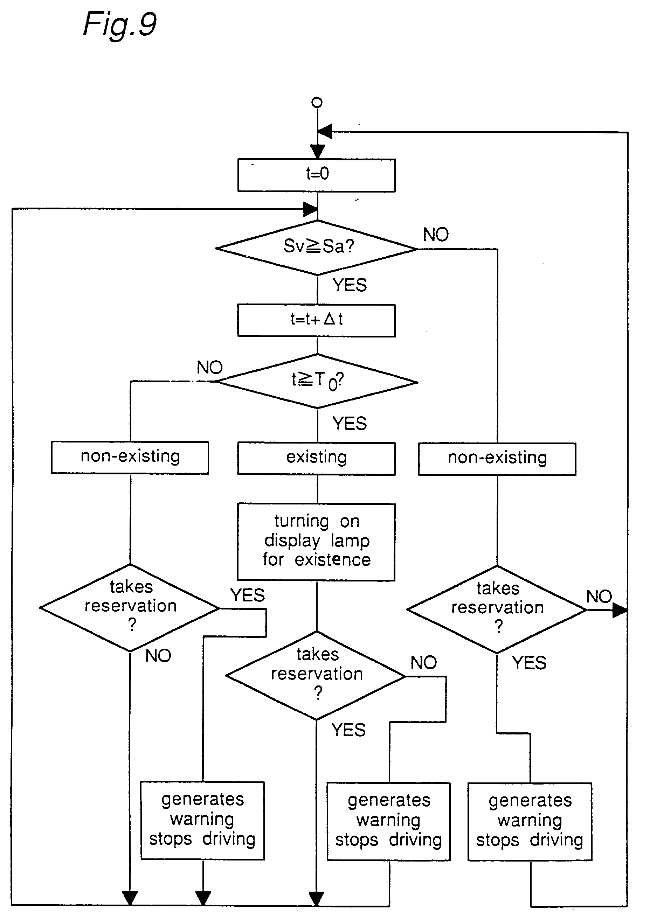

The operation by the above described construction will be described hereinafter. The presence decision will be described for a brief summary with the seat 8a as an object. When a human body sits on the seat 8a, a piezo-electric seat 10 is deformed so as to generates a voltage through the piezo-electric effect so that the generated voltage can be guided by the electrodes 11, 12. When the generated signal is inputted into the physical movement characteristic detecting means 28, the filter 29a lets only the signal component of approximately 10 Hz from approximately 1 Hz out of the input signal so as to output the physical movement signal by, for example, the heart pulse activity as the physical movement characteristics in accordance with the life activity of the human body. The amplification portion 30a amplifies the signal and the smoothing portion 31a smoothers the signals thereby filtered. Fig. 8 shows the time variation of a signal level Sv after the smoothing operation. As shown, a larger signal temporarily appears because of the impact of the sitting operation, and the closer physical movement signals appear because of the activity of the heart of the human body when the human body keeps quiet. When no human body exists on the seat, the output signal becomes zero. Although a larger signal temporarily appears as soon as an object is placed on the seat when an object has been placed on the seat, the output signal becomes zero, because the object has no physical movements by the heart activity and breathing activity as shown in the human body. The presence decision means 33 judges in accordance with the output signal as described hereinabove that the human body is present only when the physical movement signal by the heart activity of the human body has appeared. Namely, as shown in Fig. 8, the signal level Sv becomes Sa or more in the drawing as the physical movement signals exist because of the activity of the heart as described hereinabove when the human body exists. When the human body is absent, the signal level Sv becomes zero. When an object is placed on the seat, the output of Sa or more is temporarily caused, and thereafter the signal level becomes zero. The presence deciding means judges that the human body is present if the condition of the Sv ≥ Sa continues for a certain constant time To or more. The presence deciding means judges that no human body exists except for the above described case. The decision results from the presence deciding means 33 shows for each of the respective seats on the display lamps 38a through 38d of the seat control means 35. When the seat is reserved in advance, the reservation finished lamps 37a though 37d are lit on if the reservation buttons 36a through 36d are depressed so as to reserve the seats. When the reserved seat is not present in accordance and the unreserved seat is present in accordance with the presence signal from the presence deciding means 33, the control means 42 operates a warning means 43 so as to generate an warning and stop the driving operation of the driving means 7. A flow chart showing the above described procedure is shown in Fig. 9.

Conventionally there was a problem by the above described function that the presence decision was effected by mistake when an object was placed on a seat. According to the present embodiment, the above described operations allow the positive presence decision to be effected by the difference between the object and the person through the detection of the physical movement characteristics in accordance with the life activity of the human body so as to improve the accuracy of the seat control of the vehicle. The warning means 43 and the driving means 7 are controlled in accordance with such presence decision as described hereinabove, with an effect that the safety control of the moving vehicle can be maintained more positively than before.

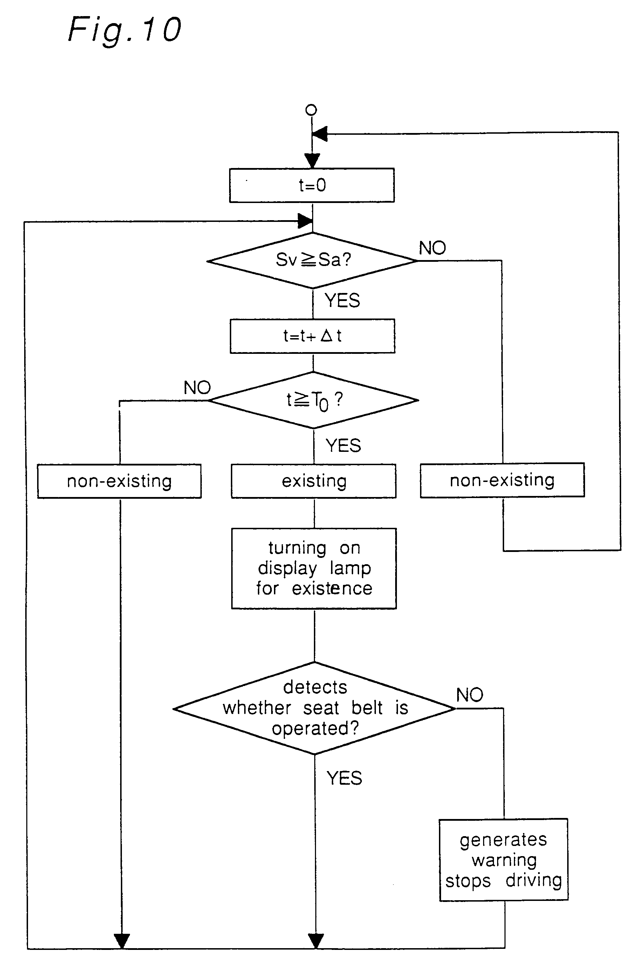

When the presence deciding means 33 judges the presence condition of the respective seats in the above described construction, the control means 42 operates the warning means 43 unless a signal showing that the engagement of the belt of the seat of the presence decision provided has been detected from the seat belt detecting means 40 is inputted so as to blink the corresponding the display lamp, further the driving operation of the driving means 7 can be stopped. Fig. 10 shows a flow chart showing the procedure. The moving vehicle cannot start by the above described operation unless the engagement of the seat belt is effected by the present person, with an effect that the safety of the passengers of the moving vehicle can be positively ensured.

In the above described embodiment, assume that an infant is left behind in a seat within the automobile and the infant can be prevent from being involved in the heat sunstroke accident, because the presence of the left infant can be detected by the above described procedure, an warning can be issued from the warning means 43 by the control means 42 when the presence condition has been exceeded for a constant time or more. In this case the warning means 43 may become a horning operation.

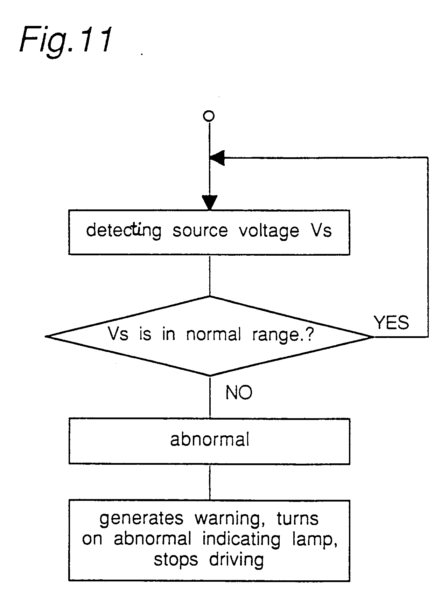

When the vibration sensor 9 or the shield cable 21 is disconnected or shorted with the mistaken sticking of an edge tool or the like in the above described embodiment, the voltage between the first resistor 17 and the second resistor 20 is varied, thus resulting in the varied source voltage of the FET. The abnormality detecting means 34 detects such voltage change so as to output the abnormality signal to the control means 42. The control means 42 generates a warning from the warning means 42 in accordance with the abnormality signal so as to light the corresponding abnormality display lamps 39a through 39d and also, stop the driving operation of the driving means 7. Fig. 11 is a flow short showing the procedure. By the above described function, there is an effect of positively retaining the safety of the moving vehicle if the vibration sensor 9 and the shield cable 21 are disconnected and shorted.

As the piezo-electric seat 10 is flexible and tough in material, it has an advantage in that it is easier to break in even in the arrangement thereof on the seat without being broken by the impacts.

As the impedance conversion portion 16 is built in the vibration sensor 9 in the present embodiment although it is commonly provided on the circuit of the physical movement characteristic detecting means 28, with an effect that it is likely to suffer from the influences of the electric noises to be caused from the cable 21.

The vibration sensor 9 has an effect in that it is hard to receive the influences of the electric noises of strong electric field or the like, having the shield portion 18.

Although the high molecule piezo-electric material is used as the vibration sensor 9 in the above described embodiment, construction of detecting changes in the transmission light quantity by the vibrations with the use of an electrostatic capacity detection type of variation sensor, an optical fiber, construction for applying the lights upon the human body surfaces so as to detect changes in the reflection light quantity by the vibration, or the like.

In the above described embodiment, the filter 15 has a characteristic of letting only the signal component of approximately 1 Hz through approximately 10 Hz from the input signal so as to output the physical movement signals by the heart pulse activity as the physical movement characteristics in accordance with the life activity of the human body. The filter may have a characteristic of letting the signal component of approximately 0.3 Hz through approximately 1 Hz pass for outputting the physical signals by the breathing as the above described movement characteristics.

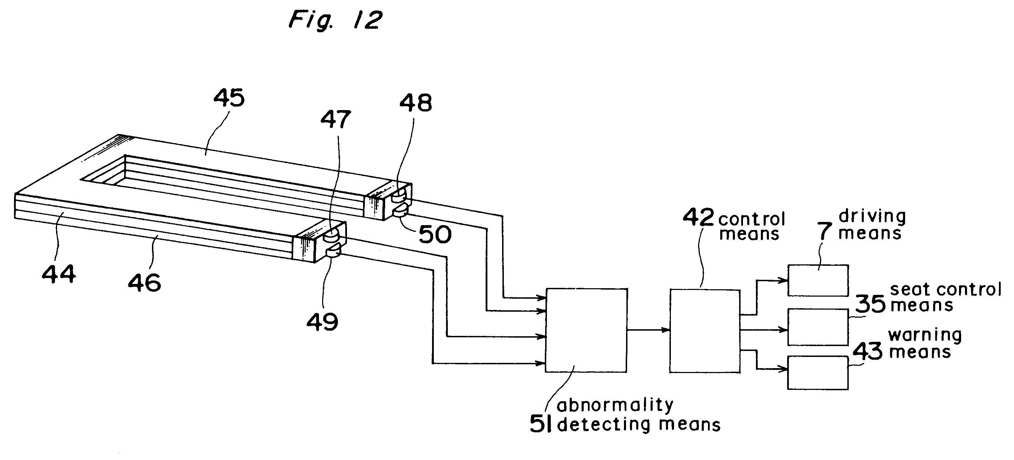

A second embodiment of the present invention will be described hereinafter. In the first embodiment, a case of having a plurality of seats is described. Additional characters with the reference characters of the respective construction will be omitted, for brief description in the following description, with the seat being provided as one. Fig. 12 is a block diagram in the same embodiment. The difference between the present embodiment and the above described first embodiment is that an abnormality detecting means 51 for judging the abnormality of the vibration sensor 9 by the detection of the resistance value among the connecting terminal portions 47 through 50 is provided with the vibration sensor 9 being composed of a macro-molecule piezoelectric material 44 of vinylden polyfluoride or the like, electrode materials 45, 46 being fixed on both the faces of the macro-molecule piezo-electric material 44, connecting terminal portions 47 through 50 provided on both the ends of the electric materials 45, 46. As the construction is the same as in the above described conventional embodiment except for the above description, the detailed description will be omitted with the same reference numerals being provided.

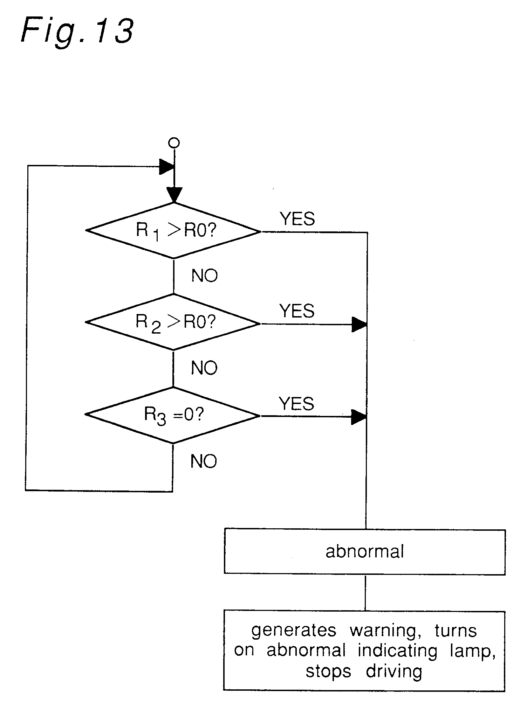

As the resistance value between the connecting terminals 47 and 48 is made infinite by the above described construction if the electrode is disconnected, the abnormality detecting means 51 judges that the electrode material 45 has been disconnected if the resistance value R1 between the guidance terminal portions 47 and 48 is larger than the predetermined set value Ro, and likewise, and judges that the electrode material 46 has been disconnected if the resistance value R2 between the guidance terminal portions 49 and 50 is larger than the Ro. As the resistance value R3 between the guidance terminals 47 and 49 becomes zero if there is a short in the electrode, the abnormality detecting means 51 can detect even the short of the electrode. As the control operation when the abnormality has been detected is similar to the first embodiment, the detailed description will be omitted. When the physical movement characteristics of the human body is detected, the operation is effected from the signal between the connecting terminal portions 47 and 49 or from the signal between the connecting terminal portions 48 and 50. A flow chart showing the procedure of the abnormality detection is shown in Fig. 13.

By the above described operation, the construction was complicated with two resistors being built in it in the first embodiment. According to the present embodiment, there is an effect in that the abnormalities of disconnection, short can be detected in the simple construction.

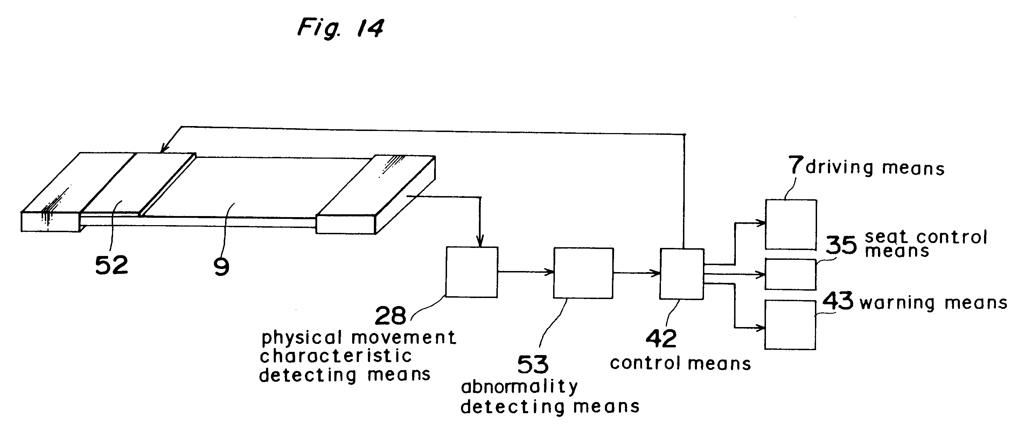

A third embodiment of the present invention will be described hereinafter. In the first embodiment, a case of having a plurality of seats is described. In the following description for brief description, assume that additional characters that the reference characters of the respective construction are attached to them are omitted with the seat being provided as one. Fig. 14 is a block diagram in the same embodiment. The difference point between the present embodiment and the first, second embodiments is that the present invention has a vibration applying means 52 which applies upon the vibration sensor 9 the vibration of the given strength by the control signal from the control means 42, and an abnormality detecting means 53 for judging the abnormality of the vibration sensor 9 in accordance with the output signal from the physical movement characteristic detecting means 28 in the application of the vibrations. The vibration applying means 52 is set to come into contact with the vibration sensor 9. As the construction except for it is the same as in the above described conventional embodiment, the detailed description will be omitted with the same reference characters.

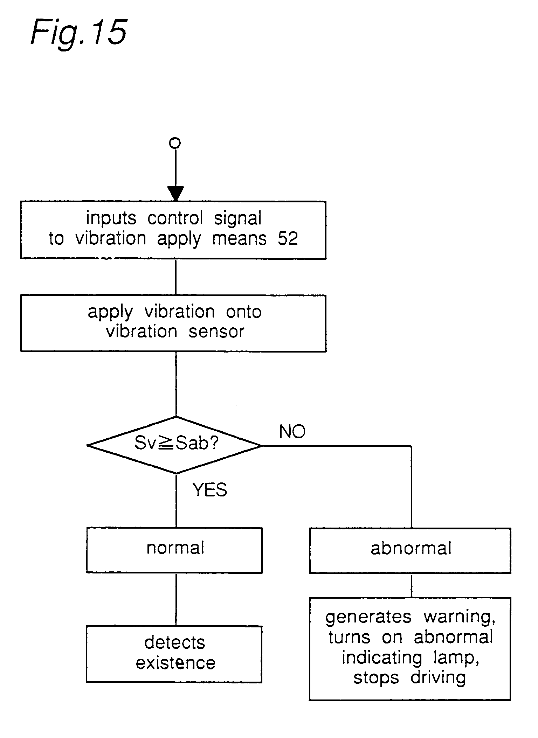

The operation by the above described construction will be described hereinafter. The vibration applying means 52 is vibrated by the control signal from the control mans 42, and the given strength of vibrations are applied upon the vibration sensor 9. When the vibration sensor 9 is normal, signals each having the given level are outputted in accordance with the applied vibrations. Assume that an edge tool is stuck, the electrodes 11, 12, the shield cable 21 of the vibration sensor 9 are disconnected or shorted by the impacts, given level of signals are not outputted from the physical movement characteristic detecting means 28 if the given strength of vibrations are applied upon the vibration sensor 9. When the composition of the piezo-electric material 10 itself is deteriorated by the exposure of the vibration sensor 9 to the high temperature environment, aging deterioration or the like, the signals of the given level are not outputted as in the above described even if the given strength of vibrations are applied upon the vibration sensor 9. The abnormality detecting means 53 compares the output signal Sv of the physical movement characteristic detecting means 28 with the predetermined set value Sab in the application of the vibrations upon the vibration sensor 9 so as to decide that Sv ≥ Sab is normal and Sv < Sab is abnormal. Fig. 15 shows a flow chart showing the procedure of the abnormality detection. The detailed description is omitted here, because the control operation in the detection of the abnormality is similar to that in the first embodiment. The vibration application upon the vibration sensor 9 is controlled by the control means 42 to be effected at the start time of the present apparatus or to be effected for each of the constant time after the start operation.

In the first embodiment and the second embodiment, the disconnection, short of the electrode of the vibration sensor 9 are detected by the above function so as to decide they are abnormal. When the abnormality has been caused in the signal conversion member itself for converting the vibrations by the physical movements into the electric signals, namely, when the abnormality that the given outputting operation cannot be effected due to the deterioration of the composition by the exposure of the piezo-electric material 10 itself into the high temperature environment, by the aging deterioration or the like in the first and second embodiments has been caused, there is a problem that it cannot be decided to be abnormal. As the abnormality is detected in the third embodiment in accordance with the output signal when the given vibrations are applied upon the vibration sensor 9, the abnormality of the signal conversion member itself is also detected, with an effect that further a safety control apparatus of higher reliability in practical point can be provided.

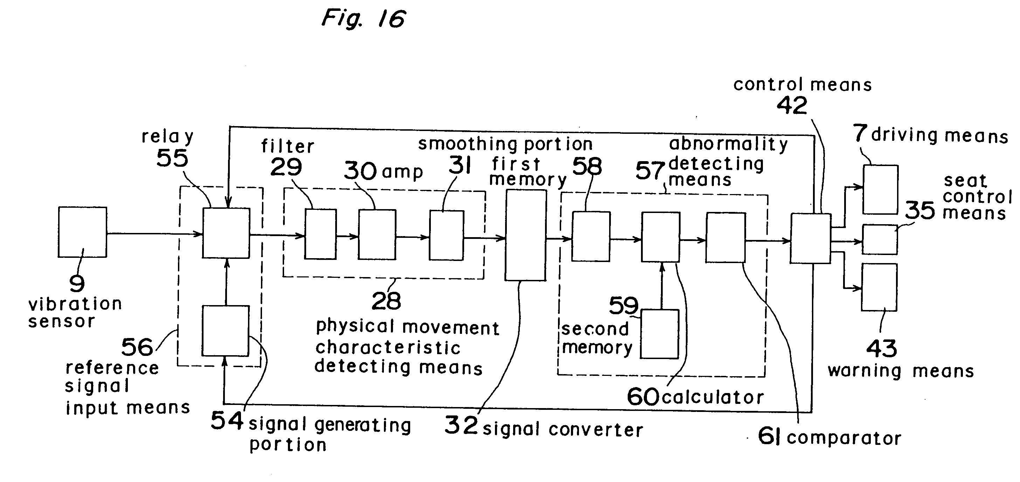

A fourth embodiment of the present invention will be described hereinafter. In the first embodiment, a case of having a plurality of seats is described. Additional characters with the reference characters being attached to the respective construction are omitted with the seat being provided as one in the following description for brief description. Fig. 16 is a block diagram of a fourth embodiment. The different points between the present embodiment and the first, second and third embodiments are that the present embodiment is provided with a reference signal input means 56 having a signal generating portion 54 of generating the reference signals predetermined by the control signal from the control means 42, a relay 55 for switching a signal transmission path between the vibration sensor 9 and the physical movement characteristic detecting means 28 into a signal transmission path between the signal generating portion 54 and the physical movement characteristic detecting means 28 by the control signal from the control means 42, and an abnormality detecting means 57 for detecting the abnormality of the physical movement characteristic detecting means 28 in accordance with the output signal of the physical movement characteristic detecting means 28 in the inputting operation of the above described reference signal, the abnormality detecting means 57 being composed of a first memory portion 58 for storing the output signals of the normalizing portion 31, a second memory portion 59 with reference wave forms being stored in advance, a calculation portion for computing the mutual correlation coefficients between the output wave forms to be stored on the first memory portion 58 and the standard wave forms stored on the second memory portion 59, a comparison portion 61 for comparing the output signal of the calculation portion 60 and the predetermined set value. The construction except for it is the same as in the above described embodiment, the detailed description is omitted with the same reference numerals being attached to them.

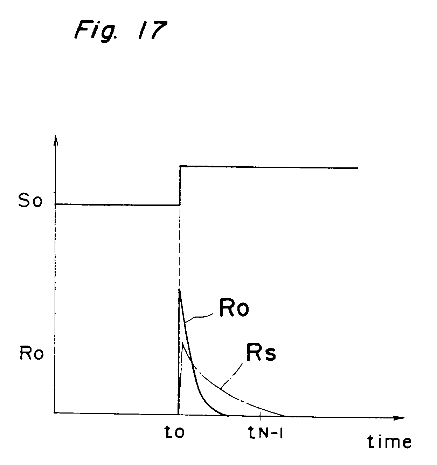

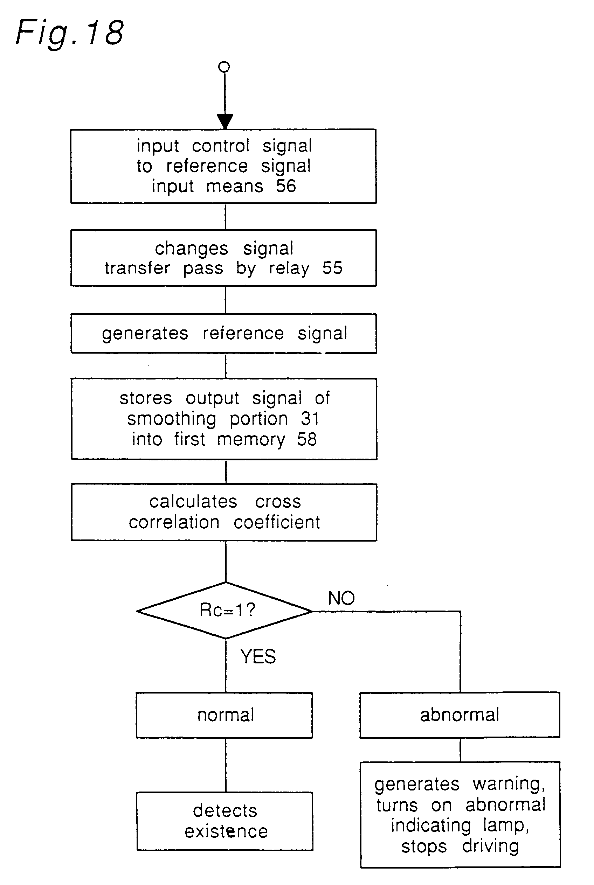

The function by the above described construction will be described hereinafter. An output signal Ro of the normalizing portion 31 when the reference signal So is applied upon the filter 29 is stored in advance in the second memory portion 59 when nothing is wrong with a filter 29, an amplifier portion 30, a normalizing portion 31. For example, Fig. 17 shows the output signal Ro of the smoothing portion 31 in the amplifying operation upon the filter 29 of the step input as So, with a solid line showing the Ro. N number of data Ro (0) through Ro (N-1) from time t₀ till tn-1 with So being applied upon it among data A/D converted data with the sampling interval 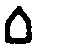 t of the Ro is stored in advance in the second memory portion 59. In the abnormality decision, a relay 55 is switched with a signal from the control means 42 so as to input into the filter 29 the signal from the signal generating portion 54. In this case, as the output signal of the vibration sensor 9 is not inputted to the filter 29, because the signal transmission path is interrupted by the relay 55. When the step input So is applied upon the filter 29 at the given step width, the output signal Rs of the smoothing portion 31 at that time is stored in the first memory 58. Namely, the Rs is converted in A / D at the sampling interval 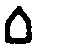 t by the signal converting means 32, and N number of data Rs (0) through Rs (N-1) from the time t₀ till the tn-1 are stored in the first memory portion 58. The calculation portion 60 calculates the cross correlation coefficient Rc equation (1) between Ro and Rs 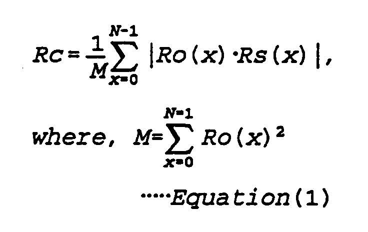 in accordance with the equation (1). Rs becomes different in wave form from Ro as shown in one dot chain line of Fig. 17 if something is wrong with either of the filer 29, the amplifier portion 30, the smoothing portion 31. Therefore, the comparison portion 61 judges the decision is abnormal if the Rc is not equal to 1, judges the decision is not abnormal if the Rc is equal to 1. The control operation when the decision has been effected to be abnormal is omitted here in the detailed description as the control operation is similar to that of the first embodiment. The controlling operation is effected by the control means 42 so that the input to the filer 29 of the reference signal is effected at the start time of the present apparatus or is effected for each of the constant time after the start. Fig. 18 shows a flow chart showing the procedure of the abnormality detection.

In the above described first through third embodiments, there is a problem by the above described functions that the abnormality of the physical movement characteristic detecting means 28 cannot be detected even if the abnormality of the vibration sensor 9 can be detected. In the present embodiment, the abnormality of the physical characteristic detecting means 28 can be detected by the comparison between the output signal in a case where the predetermined reference signal has been inputted to the physical movement characteristic detecting means 28 is compared with the reference wave form stored in advance, with an effect that a safety control apparatus of higher reliability in the practical use can be provided.

The above described first embodiment, second embodiment, third embodiment and fourth embodiment may be combined. The abnormalities of both the vibrations sensor and the physical movement characteristic detecting means can be provided, with an effect that a presence detecting apparatus of higher reliability in practical use can be provided.

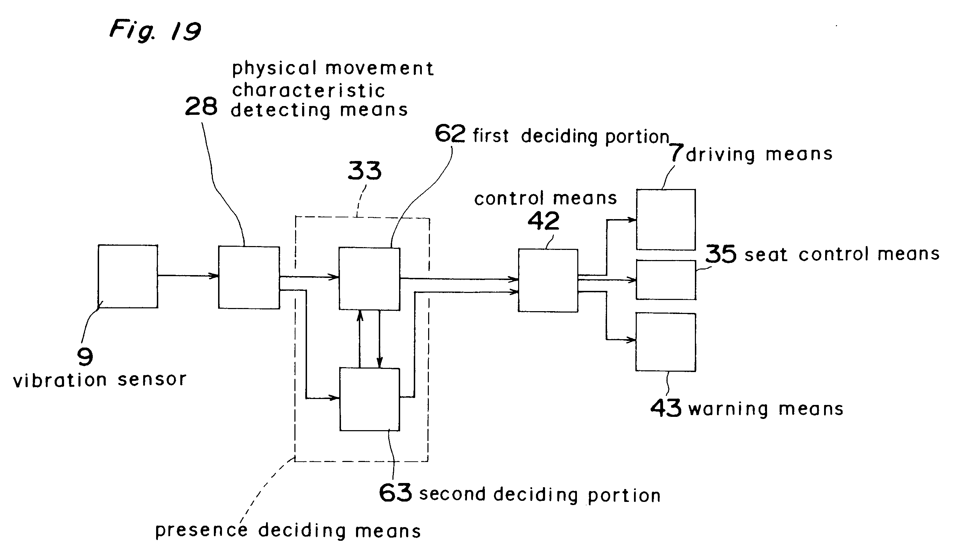

A fifth embodiment of the present invention will be described hereinafter. Although a case of having a plurality of seats is described in the first embodiment, additional characters with reference characters of the respective construction being attached to them are omitted with the seat being provided as one in the following description for brief description. Fig. 19 is a block diagram in the present embodiment. The different points between the present embodiment and the first through fourth embodiments are that as shown in Fig. 19, the presence deciding means 33 is composed of a first deciding portion 62 and a second deciding portion 63. The first deciding portion 62 judges the decision shows the presence if the output signal of the physical movement characteristic detecting means 28 is a first predetermined value or more, decides the absence if the output signal thereof shows the predetermined set value except for it. The second deciding portion 63 retains the decision of the absence until the output signal of the physical movement characteristic detecting means 28 becomes a predetermined second set value or more if the absent decision is effected in the first decision portion 62, and decides whether or not it is present in accordance with the first judgment portion 62 when the output signal of the physical movement characteristic detecting means 28 becomes the above described second set value or more. As the construction except for the above description is the same as in the above described embodiment, the detailed description will be omitted with the same reference characteristics.

The operation by the above described construction will be described hereinafter. When the presence is detected in a moving vehicle such as automobile, train, passenger plane or the like, the physical movement signals by the heart activity of and the breathing of the human body are detected by the vibration sensor 9 and the physical movement characteristic detecting means disposed in the seat as described in the first embodiment if the vehicle is at stop or the vehicle runs on a road face of less roughness so as to decide that the human body is present. When the vehicle is moving as a automobile is running on the general road of roughness, signals similar to the above described physical movement signals may appear from the physical movement characteristic detecting means 28 in spite of a fact that the person actually does not exist because of the vibrations from the vibrations of the moving vehicle itself and the vibrations from the roads. The presence judgment may be wrong in such a case. In order to solve such a problem, the present embodiment will be described hereinafter.

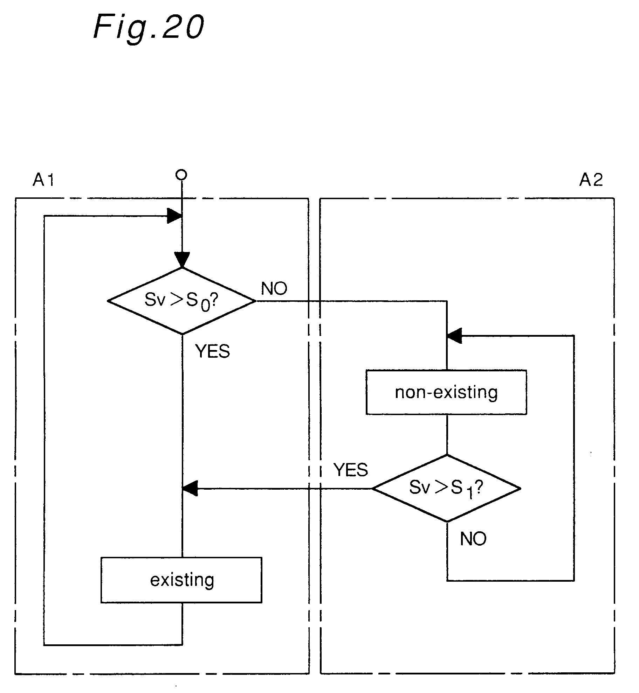

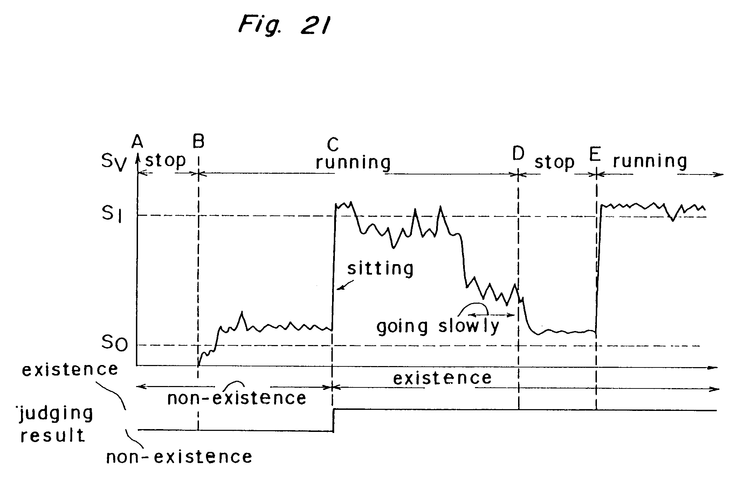

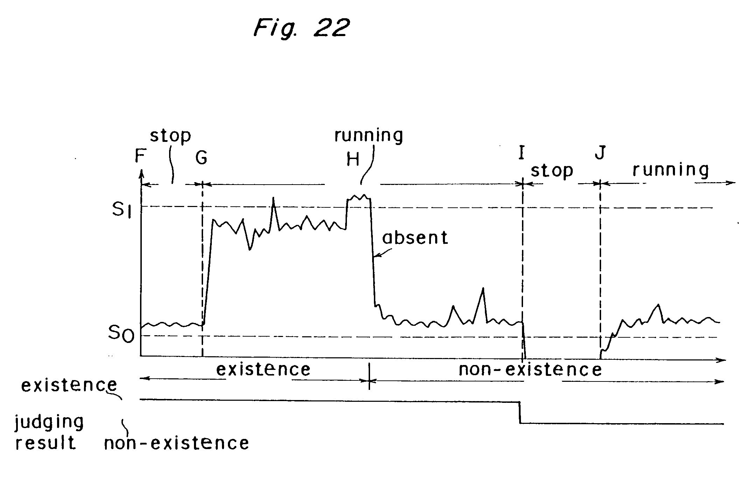

Fig. 20 shows a flow chart of the decision algorithm. Reference numeral A1 shows a processing flow by the first decision portion 62, and reference numeral A2 shows a processing flow by a second deciding portion 63. It is decided by the above described construction that the human body exists if the output signal Sv of the physical movement characteristic detecting means 28 is a predetermined first set value So or more in the first deciding portion 62, that the human body does not exist if it is not in the above described case. If the absence is decided, the decision of the absence is retained until the Sv becomes a predetermined second set value S1 or more in the second decision portion 63. If the Sv becomes S1 or more, it is decided whether or not the person exists again in accordance with the first deciding portion 62. The deciding operation will be concretely described further in accordance with the Fig. 21 and Fig. 22. Both Fig 21 and Fig. 22 show the Sv as the time passes in cases were the vehicle is at stop or running. Fig. 21 shows a case where a vehicle starts its running operation with a person being absent, and then a person sits on a seat during the running operation. Fig. 22 is a case where a vehicle stars its running operation when a person is seating, and a person leaves the seat during the running operation and is not present. In the Sv < So at a time A, the first deciding portion 62 decides that no persons exist in the case of Fig. 21. At the time A and its subsequent, the second deciding portion 63 effects the decision. The running operation of the vehicle starts from the time B, and the Sv ≥ So becomes under the influence of the vibrations by the running operation. The decision of the absence is maintained until the time C in Sv < S1. When the human body sits on a seat at a time C, Sv becomes larger by the impacts of the sitting operation. In Sv ≥ S1, the deciding operation is moved to the first deciding portion 62. In the first deciding portion 62, it is decided that the person is present on the seat as in Sv ≥ So. If the vehicle stops at the subsequent time D through E, the physical movement signal by the heart activity and the breathing of the human body is detected. The decision of the presence is continued in Sv ≥ So.

As the Sv ≥ So by the detection of such physical movement signal as described hereinabove at the time F as the human body is present from the beginning in the case of Fig. 22, the first deciding means 62 decides that a sitter is present on the seat. As the Sv ≥ So if the moving vehicle stars its running operation till the subsequent time H, the decision of the presence is continued. When the human body leaves from the seat at the time H, the Sv ≥ So may be provided under the influence of the vibrations by the running operation in spite of the actual absence. In this case, an error may be caused in the decision. As Sv < So is provided when the vehicle stops at the time I, it is decided by the first deciding portion 62 that no one exists. At its subsequent, the second deciding portion 63 maintains the decision of the absence till the Sv ≥ S1 comes.

By the above described functions, there are an effect that the presence can be detected with accuracy even if the vibrations exist by the running operation in a vehicle such as automobile, train, passenger plane or the like.

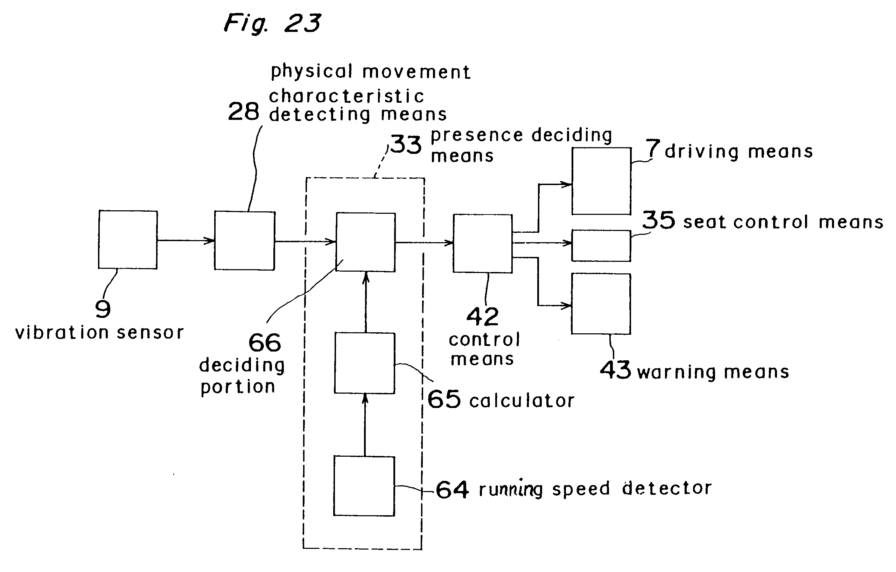

A sixth embodiment of the present invention will be described hereinafter. In the first embodiment, a case of having a plurality of seats is described in the first embodiment. Additional characters with reference characters of the respective composition being attached to them are omitted with the seat being provided as one in the following description for brief description. Fig. 23 is a block diagram of the present embodiment. The different points between the present embodiment and the first through fifth embodiments are that as shown in Fig. 23, the presence deciding means 33 is composed of a running speed detecting portion 64 for detecting the running speed of the moving vehicle, a calculation portion 65 for calculating the set value in accordance with the output signal of the running speed detecting portion 64, a deciding portion 66 for deciding whether or not a person is present in accordance with the comparison between the output signal of the physical movement characteristic detecting means 28 and the above described set value. As the construction except for the above description is the same as the above described first embodiment, the detailed description will be omitted with the same reference characteristics being provided.

Although the decision as to whether a person exists is effected with the provision of two set values So and S1 in the above described fifth embodiment, there is a problem that the Sv ≥ So is sometimes provided by the vibrations during the running operation in spite of the actual absence when the person is present and leaves the seat during the running operation, so that the error decision may be provided. A sixth embodiment is to solve such a task, and the description thereof will be described hereinafter.

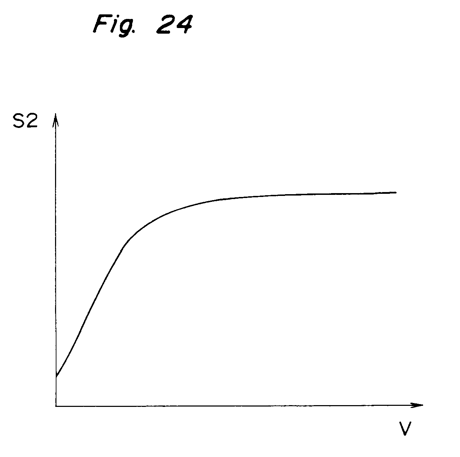

By the above described construction, the running speed detecting portion 64 receives a signal from the speed meter of, for example, the moving vehicle so as to detect the running speed V of the moving vehicle, the calculation portion 65 calculates the set value S2 for deciding the presence in accordance with the V. The relation between the V and the S2 at this time is shown in Fig. 24. The relation between the V and S2 can be obtained by the experiment. The decision portion 66 compares the output signal Sv of the physical movement characteristic detecting means 28 with the set value S2 so as to decide that a person exists in S2 ≤ Sv and to decide that no person exists if Sv < S2.

The accuracy of the presence decision is improved as an effect without error of the presence decision to be caused during the running operation as shown in a fifth embodiment by the above described operation.

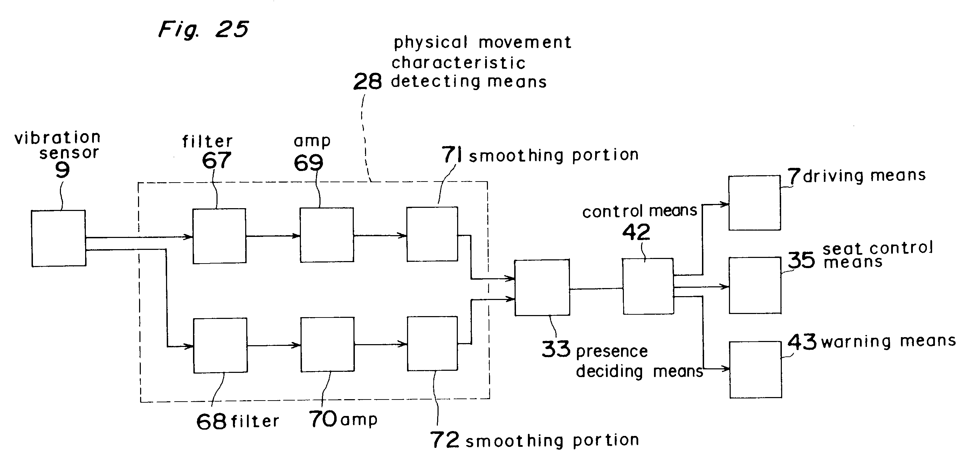

A seventh embodiment of the safety control apparatus of the present invention will be described hereinafter. Although a case of having a plurality of seats is described in the first embodiment, additional characters with reference characters of the respective construction being attached to them will be described with the seat being provided as one in the following description for brief description. Fig. 25 is a block diagram of the present embodiment. The different points between the present embodiment and the above described first through sixth embodiments are that as shown in Fig. 25, the physical movement characteristic detecting means 28 is provided with two filter portions 67, 68 for filtering the specific frequency components of the respective output signals of the vibration sensor 9, amplification portions 69, 70 and smoothing portions 71, 72, the presence deciding means 33 decides whether or not a person is present in accordance with the output signals of both the smoothing portions 71, 72. As the construction except for the above description is the same as the above described first embodiment, the detailed description will be omitted with the same reference characters.

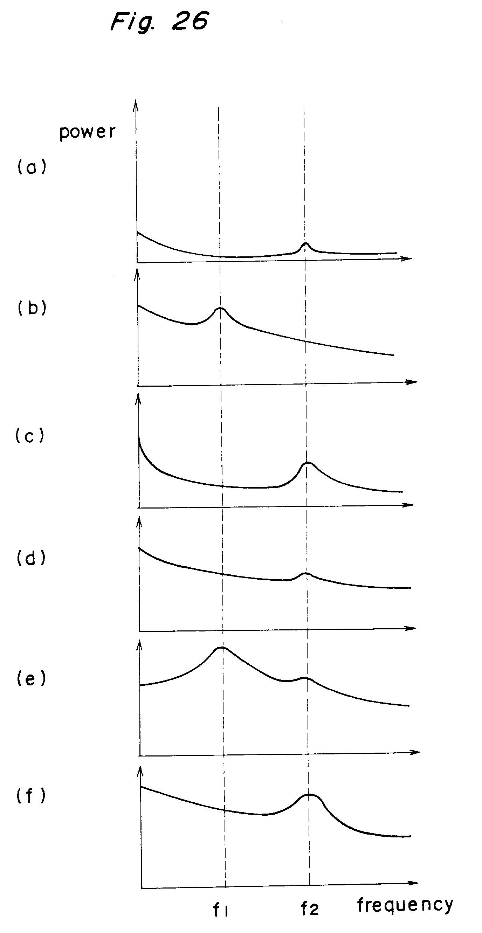

The operation by the above described construction will be described hereinafter. Fig. 26 shows the frequency distribution of the signals in each condition. A case of idling condition where a car is operated in engine and is stopped is taken into consideration. In a case where neither person nor object is placed on the seat 8, vibrations to be caused from the engine are spread to the vibration sensor 9 so as to generate minute signals. As the signal is closely related to the engine, frequency distribution having minute peak is shown in the frequency f1 as shown in Fig. 26 (a). When the human body sits on the seat 8, the hands and legs move. When the body leaves the seat, the whole body moves. The output signal of the vibration sensor 9 is also large, and the frequency components are varied by the moving way. When a person who sits on the seat keeps quiet, outputs which are comparatively low at level are generated by the close physical movements of the body to be spread by the heart activity and the breathing of the human body. When the car is at stop, the outputs show the frequency distribution which becomes a peak at the frequency f1 of 10 Hz or less as shown in Fig. 26 (b). When an object is placed on a seat 8, the frequency distribution which becomes slightly larger in the signal component of the f2 of the frequency distribution of the (a) is shown as in the (c), because signals are generated by the vibrations of an object to be excited through the vibrations by the engine.

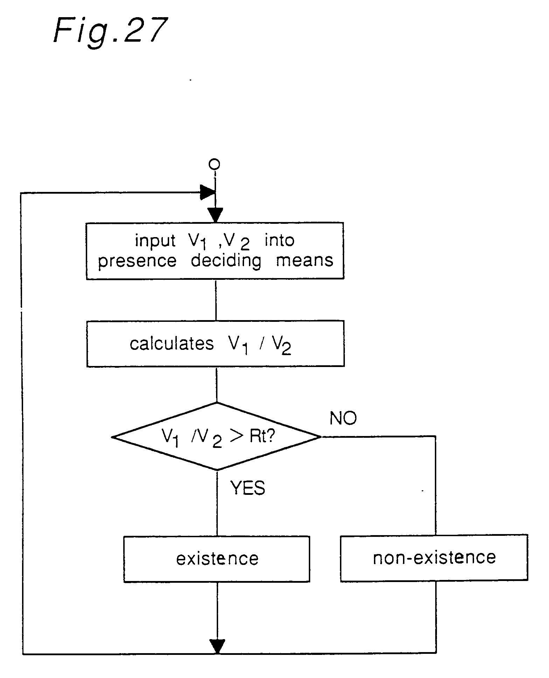

A case where a car is running will be described hereinafter. As the vibrations to be spread from the road face are added to the vibrations to be caused from the engine in a condition where neither person nor object is placed on the seat, piezo-electric elements disposed on the seat are vibrated even when the human body is not provided on the seat so as to cause the outputs larger than the (a). The output signal has close relation to the vibrations of the engine as in the case of the (a), and such frequency distribution as become a peak with frequency f2 higher than 10 Hz as shown in Fig. 26 (d). When a person sits on a seat and drives a car, two components shown in the (b) and the (d) are multiplied. The vibrations of the human body to be excited by the running vibrations are added so that the output signal from the piezoelectric element becomes such frequency distribution as shown in Fig. 26 (e). When an object is placed on a seat during the running operation, the vibrations of the object to be excited by the vibrations during the running operation are added to the signal component (d) by the vibrations during the running operation, without signals of the (b) which is the signal component by the close physical movement of the human body, so that such frequency distribution, as shown in Fig. 26 (f), of the respective larger levels of the frequency distribution of the (c). As the size of the signal of the frequency f1 is equal to the size of the signal when a car is at stop with a person sitting on a seat, it is difficult to tell the difference between them with amplified, smoothed signal only with the frequency components being filtered as in the conventional embodiment. In the present embodiment, a frequency f2 which becomes a peak of a signal by the vibration during the running operation of a car, in addition to a frequency f1 which becomes a peak of a signal by the close physical movement of the human body, is noticed. Assume that the size of a signal of the frequency component of the f1, f2 are respectively V1, V2, the V1 which becomes a signal component by the close physical movement of the human body becomes larger, it is equal to V2 at stop, is V2 or more during the running operation. In the case of the object, V1 becomes extremely small during the stop and running operations, thus resulting in V1 < V2. Therefore, the difference between the person and the object can be provided even during the running operation. the presence is shown in $\text{V1 / V2 > Rt}$ with the decision constant Rt being determined in advance, and the absence is provided in $\text{V1 / V2 < Rt}$. In the present embodiment, the output signal from the vibration sensor 9 is divided into the respective components of f1 and f2 by two filters of a filter 67 for filtering the frequency component of the f1, a filter 68 for filtering the frequency component of the f2. The respective output signals are amplified by the respective amplification portions 69, 70, are smoothed by the smoothing portions 71, 72 and are fed to the presence deciding means 33. The respective output signals are compared with as described hereinabove so as to decide the presence, absence of the person. Fig. 27 shows a flow chart showing the decision procedure.

By the division of the output signal of the vibration sensor disposed on the seat into a plurality of frequency components so as to compare the size of the respective signals by the above described operation, signals by the small physical movements of the human body to be spread by the heart activity and the breathing activity in the quiet condition of a person sitting on the seat, and signals to be generated by the vibrations during the running operation of the car so as to decide the absence and presence of the person by the comparison of both. The difference from a case where an object is placed even during the running operation can be made, thus allowing the presence detection within the compartment to be effected without the error action.

In the above described embodiment, the presence decision is effected by the comparison between the output signals from the physical movement characteristic detecting means 28 and the previously determined set values.

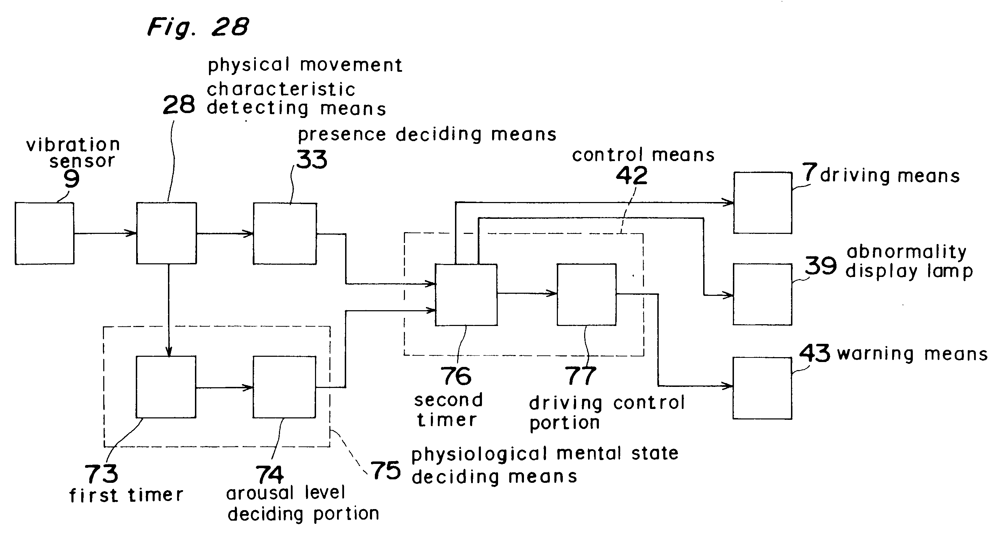

An eighth embodiment of the safety control apparatus of the present invention will be described hereinafter. Although a case of having a plurality of seats is described in the first embodiment, additional characters with reference characters of the respective construction being attached to them will be omitted with the seat being provided as one in the following description for brief description. Fig. 28 is a block diagram of the present embodiment. The different points between the present embodiment and first through seventh embodiments are that as shown in Fig. 28, a physiological mental state deciding means 75 provided with a first timer 73 to operate if the physical movement signals to be inputted from the physical movement characteristic detecting means 28 are within the predetermined set range, and an arousal level deciding portion 74 for deciding the arousal level of the present person in accordance with a clocking signal to be inputted from the first timer 73 are provided, a control means 42 is provided with a second timer 76 to operate if the arousal level deciding signal to be inputted from the physiological mental state deciding means 75 is beyond the predetermined set range with a presence signal from the presence deciding means 33 being inputted, a driving control portion 77 for stopping the driving operation of the driving means 7 if the clocking signal of the second timer 76 is a predetermined set time or more, a warning generating means 43 for generating warnings by the operation of the second timer 76, an abnormality display lamp 39 which blinks due to the operation of the second timer 76. As the construction except for the above description is the same as the above described first embodiment, the detailed description will be omitted with the same reference characters.

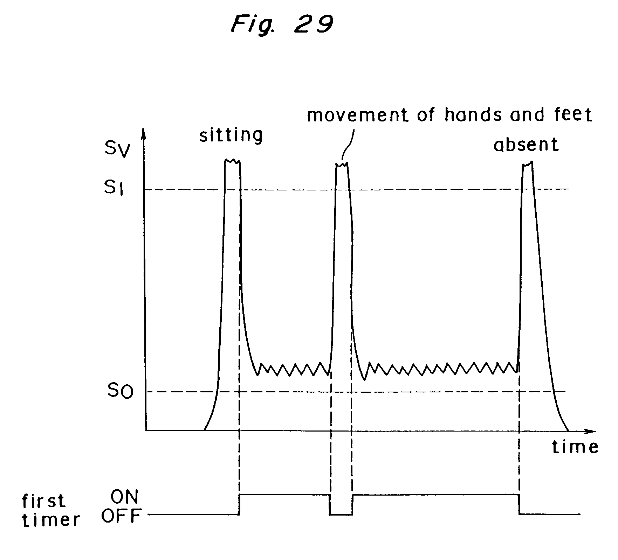

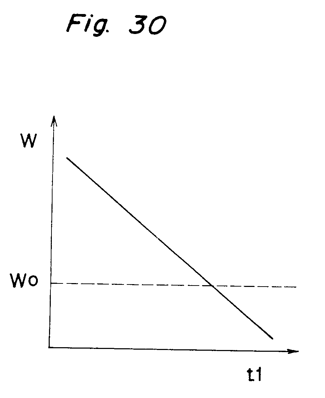

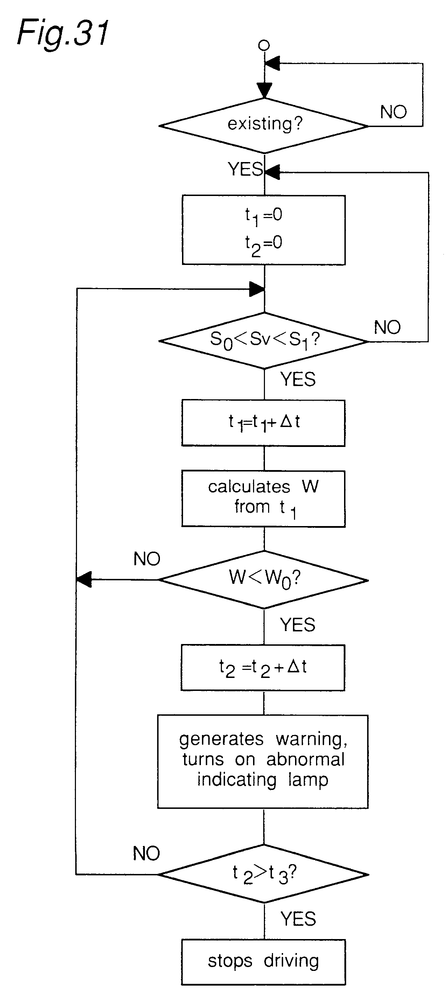

The operation by the above described construction will be described hereinafter. When the presence on a certain seat is decided by the presence deciding means 33, the first timer 79 is operated if the physical movement signal to be inputted from the physical movement characteristic detecting means 28 is within the predetermined set range in the physiological mental state deciding means 75 and the arousal level deciding portion 74 decides the arousal level of the present person in accordance with the clocking time to be counted by the first timer 73. The things will be described with the use of Fig. 29 and Fig. 30. Fig. 29 shows the output signal Sv from the physical movement characteristic detecting means 28. In the physiological mental state deciding means 75, set values So, S1, Sv shown in the drawing are compared with Sv. The first timer 73 starts its clocking operation if So < Sv < S1. Here So, S1 are the same as the value shown in the above described first embodiment. The arousal level deciding portion 74 decides the arousal level w of the present person in accordance with the clocking time t1 of the first timer 73. The arousal level W and the clocking time t1 are generally in such relation as shown in Fig. 30. The relation between the W and the t1 is stored in advance in the arousal level deciding portion 74. As the t1 becomes longer in the same drawing, the arousal level W becomes lower. In the control means 42, the second timer 76 operates so as to start its clocking operation if the W is a set value, Wo shown in Fig. 29, or lower, and the warning means 43 generates a warning so as to blink the abnormality display lamp 39. If the clocking time t2 of the second timer is the predetermined set time t3 or more, the driving control portion 77 stops its driving operation of the driving means 7. Fig. 31 shows a flow chart showing the above described procedure.

The arousal level is obtained, by the above described operation, in accordance with the quiet time of the physical movements of the present person so as to generate a warning when the arousal level has been lowered so as to control of stopping the driving operation of the moving vehicle when the condition continues, with an effect that the safety operation of the vehicle can be maintained.

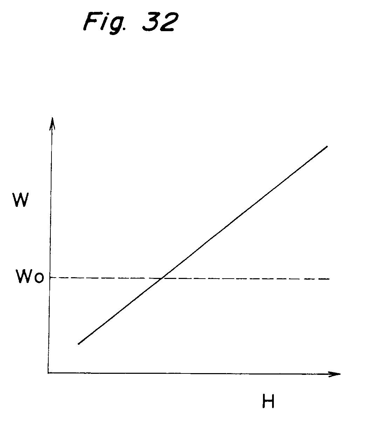

Although the arousal level was to be obtained from the physical movement quiet time of the present person in the above described embodiment, the physiological mental state deciding means 75 may be composed of a heart pulse detecting portion for detecting the heart pulse numbers of the present person in accordance with the physical movement signals to be inputted from the physical movement characteristic detecting means 28 and an arousal level deciding portion for deciding the arousal level in accordance with the heart pulse signal to be inputted from the above described heart pulse detecting portion. In the heart pulse detecting portion, the calculation of the heart pulse numerals is detected from the peak interval of the physiological movement signal. In this case, the self correlation coefficient may be calculated from the physical movement signal so as to obtain the heart pulse number from the basic period. The relation between the heart pulse number H and the arousal level W is shown in Fig. 32. It is generally known that the arousal level W is lowered in accordance with the reduction of the heart pulse number as shown in the same drawing. The arousal level deciding portion calculates the arousal level W in accordance with the relation of the same drawing. The control means 42 effects a safety control operation similar to the above described embodiment if, for example, the W is Wo or lower in accordance with the calculation value so that the safety operation of the vehicle can be retained. Although the arousal level is decided in the above described arousal level deciding portion, a heart disease such as cardiac failure may be detected.

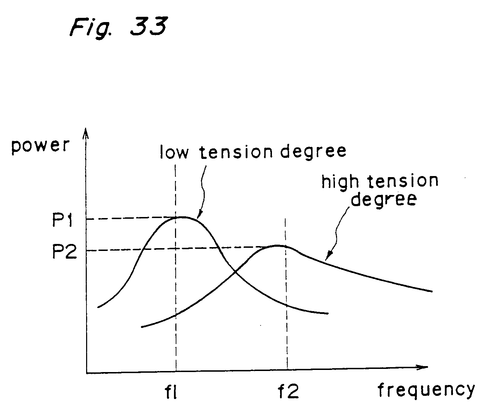

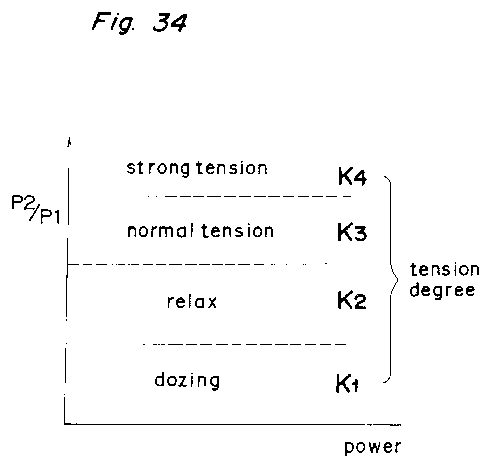

The physiological mental state deciding means 75 as the other embodiment may be composed of a calculating portion for effecting the frequency analysis of the physical movement signal to be inputted from the physical movement characteristic detecting means 28 and a tension degree deciding portion for deciding the mental, physical tension degree of the present person in accordance with the frequency analysis signal to be inputted from the above described calculating portion. Fig. 33 shows the relation of the frequency analysis results of the physical movement signal of the present person and the tension degree of the present person detected by the vibration sensor. As the present person becomes tense as shown in the same drawing, the peak of the frequency distribution of the physical movement signal becomes the side of the high frequency. As the present person is relaxed, the peak becomes the side of the low frequency. The ratio P2 / P1 is obtained about the powers p1, p2 in the respective frequencies f1, f2 as shown in Fig. 33 in the above described tension degree deciding portion in accordance with it, the tension degree k is calculated in accordance with the Fig. 34. Fig. 34 conceptually shows the relation between the ratio P2 / P1 and the tension degree k (K1 through K4). In the control means 42, such same safety control operation as in the above described embodiment is effected if the K is in the region of k1 and k4 in accordance with the calculated tension degree k so that the safety operation of the moving vehicle can be retained.

The following effects are provided in accordance with the safety control apparatus of the present invention as described hereinabove.

Conventionally error operations are caused in the safety control operation, because the person and the object on the seat cannot be discriminated. In the present invention, the physical movement characteristics, namely, the physical movement on the physical surface to be caused by the heart activity and the breathing activity are detected in accordance with the life activity of the human body so as to decide whether or not a person exists. Therefore, discrimination between the person and the object can be effected so that the presence of the human body can be detected more positively. Therefore, the safety control operation such as seat control, seat belt engagement confirmation, the control of the driving condition or the like can be effected without an error operation.

Further, the physiological mental condition of the arousal level, tension degree or the like of the person present is judged in accordance with the physical movement signal as described hereinabove so as to effect the safety control such as stop of the vehicle driving operation when the arousal level is lowered, and the tension degree is increased, so that the safety of the operation of the vehicle can be further improved.

Although the present invention has been fully described by way of example with reference to the accompanying drawings, it is to be noted here that various changes and modifications will be apparent to those skilled in the art. Therefore, unless otherwise such changes in modifications depart from the terms of the claims.

## Claims

1. A presence detecting apparatus of a vehicle comprising:
a physical movement characteristic detecting means (28) for detecting the physical movement characteristics of a human body on the seat in accordance with the life activity of the human body with a signal from a vibration sensor (9) disposed in the vehicle's seat; and
a presence deciding means (33) for judging whether or not the human body is present on the seat by discriminating between the person and another object in accordance with the frequency characteristics detected by the physical movement characteristic detecting means (28).

2. A safety control apparatus for use in conjunction with a presence detecting apparatus according to claim 1 comprising:
a seat reserving means (35) for making reservations of seats, the control means (42) comparing a seat reserving signal to be inputted from the seat reserving means (35) with a presence signal to be inputted from the presence deciding means (33) so as to control the driving condition of the vehicle.

3. A safety control apparatus for use in conjunction with the presence detecting apparatus according to claim 1,
comprising a seat belt detecting means (40) for detecting the engagement of a seat belt (41), and a warning generating means (43), the control means (42) controlling the driving condition of the warning generating means (43) and a driving means (7) in accordance with a presence signal to be inputted from the presence deciding means (33) and a seat belt engagement signal to be inputted from the seat belt detecting means (40).

4. The presence detecting apparatus as defined in claim 1, where the vibration sensor (9) is composed of a piezo-electric material (10), an electrode (11, 12) provided on both the faces of the piezo-electric material (10), a connecting terminal portion (14, 15) being connected with the electrode (11, 12) so as to guide the output signal of the electrode (11, 12).

5. The presence detecting apparatus as defined in claim 4, where the vibration sensor (9) has an impedance conversion portion (16) connected adjacently to a connecting terminal portion (14).

6. The safety control apparatus as defined in claim 2 or 3 or 5 where the vibration sensor (9) has a shielded portion (18) on its outer block.

7. The presence detecting apparatus as defined in claim 1, where the vibration sensor (9) is provided with a piezo-electric material (10), an electrode (11, 12) provided on both the faces of the piezo-electric material (10), a connecting terminal portion (14, 15) being connected with the electrode (11, 12) so as to guide the output signal of the electrode (11, 12) and a first resistor (17) connected between the electrodes (11, 12), and further comprising a second resistor (20) connected with one of the electrodes, an abnormality detecting means (34) for detecting the abnormality of the vibration sensor (9) in accordance with the voltage value divided with the first resistor (17) and the second resistor (20).

8. The presence detecting apparatus as defined in claim 1, where the vibration sensor (9) has a piezo-electric material (44), an electrode (45, 46) provided on both the faces of the piezo-electric material (44), a connecting terminal portion (47-50) provided on both ends of the electrodes (45, 46), and further comprising an abnormality detecting means (51) for judging the abnormality of the vibration sensor (9) by the detection of the resistance value between the connecting terminal portions (47-50).

9. The presence detecting apparatus as defined in claim 1, further comprising a vibration applying means (52) for applying vibrations upon a vibration sensor (9), an abnormality detecting means (53) for detecting the abnormality of the vibration sensor in accordance with the output signal from the physical movement characteristic detecting means (28) at the time when the vibrations are applied by the vibration applying means (52).

10. The presence detecting apparatus as defined in claim 1, further comprising a reference signal input means (56) for inputting the predetermined reference signal to the physical movement characteristic detecting means (28), an abnormality detecting means (57) for detecting the abnormality of the physical movement characteristic detecting means (28) in accordance with the output signal of the physical movement characteristic detecting means (28) at the time when the reference signal has been inputted.

11. The presence detecting apparatus as defined in claim 1, where the physical movement characteristic detecting means (28) comprises a filter (29) for filtering only a specific frequency component among the output signals of the vibration sensor (9), an amplifier portion (30) for amplifying the output signal of the filter (29), and a smoothing portion (31) for smoothing the output signals of the amplifying portion (30).

12. The presence detecting apparatus as defined in claim 1, where the presence deciding means (33) is provided with a timer to be operated if the physical movement signal to be inputted from the physical movement characteristic detecting means is a predetermined set value or more, and a deciding portion which judges the presence if a clocking signal to be inputted from the timer is a certain constant time or more, and judges the absence if it is not the time.

13. The presence detecting apparatus as defined in claim 1, where the presence deciding means (33) is composed of a first deciding portion (62) for judging that a human body is present if the physical movement signal to be inputted from the physical movement characteristic detecting means (28) is a predetermined first set value or more and judging that a human body is absent if it is less that the first value, and a second deciding portion (63) retains the decision of the absence before the physical movement signal becomes the predetermined second set value or more if the absence judgment is effected by the first deciding portion (62) and judges whether or not a human body is present in accordance with the first deciding portion (62) when the physical movement signal becomes the second set value or more.

14. The presence detecting apparatus as defined in claim 1, wherein said presence deciding means (33) is comprised of a running speed detecting means (64) for detecting the running speed of a moving vehicle, a calculating portion (65) for calculating a set value for the presence judgment in accordance with the running speed signal to be inputted from the running speed detecting means (64), and a deciding portion (66) for comparing the physical movement signal to be inputted from the physical movement characteristic detecting means (28) with the set value so as to decide that a human body is present.

15. The presence detecting apparatus as defined in claim 1, where the physical movement characteristic detecting means (28) is provided with a plurality of filters (67,68) for filtering a specific frequency component of the respective output signals of the vibration sensor (9) respectively, and the presence deciding means (33) judges whether or not a human body is present by comparing the output signals of the filters (67, 68).

16. A safety control apparatus for use in connection with the presence detecting apparatus according to claim 1, further comprising a physiological mental state deciding means (75) for judging the physiological mental state such as arousal level, tension degree or the like of a human body in accordance with the physical movement signal to be inputted from the physical movement characteristic detecting means (28), a control means (42) having a timer (76) to be operated if the physiological mental state deciding signal to be inputted from the physiological mental state deciding means (75) is beyond a predetermined set range, with a presence signal being inputted from the presence deciding means (33), a driving control portion (77) for stopping the driving operation of the vehicle if the clocking signal of the timer (76) is a predetermined set time or more , and a warning generating means (43) for generating a warning by the operation of the timer (76).

17. The safety control apparatus as defined in claim 16, where the physiological mental state deciding means (75) is provided with a timer (73) to be operated if a physical movement signal to be inputted from the physical movement characteristic detecting means (28) is a predetermined set value or more, an arousal level deciding portion (74) for deciding an arousal level of a person present in the accordance with the clocking signal to be inputted from the timer (73).

18. The safety control apparatus as defined in claim 16, where the physiological mental state deciding means (75) is provided with a heart pulse detecting portion for detecting the heart pulses of a person present in accordance with the physical movement signal to be inputted from the physical movement characteristic detecting means (28), and an arousal level deciding portion (74) for judging an arousal level in accordance with the heart pulse signal to be inputted from the heart pulse detecting portion.

19. The safety control apparatus as defined in claim 16, where the physiological mental state deciding means (75) is provided with a computing portion for effecting a frequency analysis of the physical movement signals to be inputted from the physical movement characteristic detecting means (28), and a tension degree deciding portion for judging the mental and physical tension degree of a person present in accordance with the frequency analysis signal to be inputted from the calculating portion.

## Patentansprüche

1. Anwesenheitserfassungsvorrichtung eines Fahrzeuges, mit:
einem Eigenschaftserfassungsmittel (28) zum Erfassen der Eigenschaften der physikalischen Bewegung eines menschlichen Körpers auf dem Sitz in Übereinstimmung mit der Lebensaktivität des menschlichen Körpers mit einem Signal von einem Vibrationssensor (9), welcher sich in dem Fahrzeugsitz befindet; und
einem Anwesenheitsentscheidungsmittel (33) zum Beurteilen, ob oder ob nicht der menschliche Körper auf dem Sitz vorhanden ist, durch Unterscheiden zwischen der Person und einem anderen Objekt in Übereinstimmung mit den Frequenzeigenschaften, welche von dem Eigenschaftserfassungsmittel (28) erfaßt wurden.

2. Sicherheitskontrollvorrichtung zum Gebrauch in Verbindung mit einer Anwesenheitserfassungsvorrichtung gemäß Anspruch 1, mit:
einem Sitzreservierungsmittel (35) zum Erstellen von Sitzreservierungen, wobei das Kontrollmittel (42) ein Sitzreservierungssignal, welches von den Sitzreservierungsmitteln (35) einzugeben ist, mit einem Anwesenheitssignal vergleicht, welches von dem Anwesenheitsentscheidungsmittel (33) einzugeben ist, um somit die Fahrbedingung des Fahrzeuges zu kontrollieren.

3. Sicherheitskontrollvorrichtung zum Gebrauch in Verbindung mit der Anwesenheitserfassungsvorrichtung gemäß Anspruch 1,
mit einem Sitzgurterfassungsmittel (40) zum Erfassen des Einsatzes eines Sitzgurtes (41), und einem Warnungserzeugungsmittel (43), wobei das Kontrollmittel (42), welches die Fahrbedingung des Warnungserzeugungsmittels (43), und eines Fahrmittels (7) kontrolliert, in Übereinstimmung mit einem Anwesenheitssignal, welches von dem Anwesenheitsentscheidungsmittel (33) einzugeben ist, und einem Sitzgurteinsatzsignal, welches von dem Sitzgurterfassungsmittel (40) einzugeben ist.

4. Anwesenheitserfassungsvorrichtung nach Anspruch 1,
dadurch gekennzeichnet, daß der Vibrationssensor (9) aufgebaut ist aus einem piezoelektrischen Material (10), einer auf den beiden Seiten des piezoelektrischen Materials (10) angeordneten Elektrode (11, 12), einem Verbindungsanschlußabschnitt (14, 15), welcher mit der Elektrode (11, 12) verbunden ist, um so das Ausgangssignal der Elektrode (11, 12) zu führen.

5. Anwesenheitserfassungsvorrichtung nach Anspruch 4,
dadurch gekennzeichnet, daß der Vibrationssensor (9) einen Impedanzumwandlungsabschnitt (16) aufweist, welcher benachbart an einem Verbindungsanschlußabschnitt (14) angeschlossen ist.

6. Sicherheitskontrollvorrichtung gemäß einem der Ansprüche 2 oder 3 oder 5,
dadurch gekennzeichnet, daß der Vibrationssensor (9) einen abgeschirmten Abschnitt (18) auf seinem äußeren Block aufweist.

7. Anwesenheitserfassungsvorrichtung nach Anspruch 1,
dadurch gekennzeichnet, daß der Vibrationssensor (9) versehen ist mit einem piezoelektrischen Material (10), einer Elektrode (11, 12), welche auf den beiden Seiten des piezoelektrischen Materials (10) angeordnet ist, einem Verbindungsanschlußabschnitt (14, 15), welcher mit der Elektrode (11, 12) verbunden ist, um so das Ausgangssignal der Elektrode (11, 12) zu führen, und einem ersten Widerstand (17), welcher zwischen den Elektroden (11, 12) angeschlossen ist, und weiterhin mit einem zweiten Widerstand (20), welcher mit einer der Elektroden verbunden ist, einem Abnormalitätserfassungsmittel (34) zum Erfassen der Abnormalität des Vibrationssensors (9) in Übereinstimmung mit dem ersten Widerstand (17) und dem zweiten Widerstand (20) dividierten Spannungswert.

8. Anwesenheitserfassungsvorrichtung nach Anspruch 1,
dadurch gekennzeichnet, daR der Vibrationssensor (9) piezoelektrisches Material (44), eine Elektrode (45, 46), welche sich auf beiden Seiten des piezoelektrischen Materials (44) befindet, einen Verbindungsanschlußabschnitt (47-50), welcher sich auf beiden Enden der Elektroden (45, 46) befindet und weiterhin ein Abnormalitätserfassungsmittel (51) zum Beurteilen der Abnormalität des Vibrationssensors (9) durch Erfassung des Widerstandswertes zwischen den Verbindungsanschlußabschnitten (47-50) aufweist.

9. Anwesenheitserfassungsvorrichtung nach Anspruch 1,
gekennzeichnet durch ein Vibrationszuführmittel (52) zum Anlegen von Vibrationen an einen Vibrationssensor (9), einem Abnormalitätserfassungsmittel (53) zum Erfassen der Abnormalität des Vibrationssensors in Übereinstimmung mit dem Ausgangssignal des Eigenschaftserfassungsmittels (28) zum Erfassen der Eigenschaften einer physikalischen Bewegung, zu dem Zeitpunkt, an dem die Vibrationen durch das Vibrationszuführmittel (52) angelegt werden.

10. Anwesenheitserfassungsvorrichtung nach Anspruch 1,
gekennzeichnet durch ein Referenzsignaleingabemittel (56) zum Eingeben des vorbestimmten Referenzsignals in die Eigenschaftserfassungsmittel (28) zum Erfassen der Eigenschaften einer physikalischen Bewegung, ein Abnormalitätserfassungsmittel (57) zum Erfassen der Abnormalität des Eigenschaftserfassungsmittels (28) zum Erfassen der Eigenschaften einer physikalischen Bewegung, in Übereinstimmung mit dem Ausgangssignal des Eigenschaftserfassungsmittels (28) zum Erfassen der Eigenschaften einer physikalischen Bewegung, zu dem Zeitpunkt, an dem das Referenzsignal eingegeben wurde.

11. Anwesenheitserfassungsvorrichtung nach Anspruch 1,
dadurch gekennzeichnet, daß das Eigenschaftserfassungsmittel (28) zum Erfassen der Eigenschaften einer physikalischen Bewegung einen Filter (29) zum ausschließlichen Filtern einer bestimmten Frequenzkomponente unter den Ausgangssignalen des Vibrationssensors (9), einen Verstärkerabschnitt (30) zum Verstärken des Ausgangssignals des Filters (29) und einen Glättungsabschnitt (31) zum Glätten der Ausgangssignale des Verstärkungsabschnittes (30) enthält.

12. Anwesenheitserfassungsvorrichtung nach Anspruch 1,
dadurch gekennzeichnet, daß das Anwesenheitsentscheidungsmittel (33) einen Timer aufweist, welcher aktiviert wird, wenn das Signal der physikalischen Bewegung, welches von dem Eigenschaftserfassungsmittel zum Erfassen der Eigenschaften einer physikalischen Bewegung einzugeben ist, einem vorbestimmten Wert entspricht oder größer als dieser ist, und einen Entscheidungsabschnitt aufweist, welcher die Anwesenheit beurteilt, wenn ein Taktsignal, welches von dem Timer einzugeben ist, einer bestimmten konstanten Zeit entspricht oder größer als diese ist und das Urteil abwesend fällt, wenn es nicht der Zeit entspricht.

13. Anwesenheitserfassungsvorrichtung nach Anspruch 1,
dadurch gekennzeichnet, daR das Anwesenheitsentscheidungsmittel (33) zusammengesetzt ist aus einem ersten Entscheidungsabschnitt (62) zum Beurteilen, ob ein menschlicher Körper vorhanden ist, wenn das Signal der physikalischen Bewegung, welches von dem Eigenschaftserfassungsmittel (28) zum Erfassen der Eigenschaften eine physikalischen Bewegung einzugeben ist, einem vorbestimmten ersten, gesetzten Wert entspricht oder größer als dieser ist und zum Beurteilen, daR ein menschlicher Körper nicht vorhanden ist, wenn es kleiner ist als der erste Wert, und ein zweiter Entscheidungsabschnitt (63) die Entscheidung der Abwesenheitzurückhält, bevor das Signal der physikalischen Bewegung den vorbestimmten, zweiten, gesetzten Wert oder einen größeren Wert annimmt, wenn das Urteil abwesend durch den ersten Entscheidungsabschnitt (62) gefällt wurde und beurteilt, ob oder ob nicht ein menschlicher Körper vorhanden ist, in Übereinstimmung mit dem ersten Entscheidungsabschnitt (62), wenn das Signal der physikalischen Bewegung den zweiten gesetzten Wert annimmt oder größer als dieser wird.

14. Anwesenheitserfassungsvorrichtung nach Anspruch 1,
dadurch gekennzeichnet, daß das Anwesenheitsentscheidungsmittel (33) aufweist: ein Bewegungsgeschwindigkeitserfassungsmittel (64) zum Erfassen der Bewegungsgeschwindigkeit eines sich bewegenden Fahrzeuges, einen Berechnungsabschnitt (65) zum Berechnen eines gesetzten Wertes für die Beurteilung der Anwesenheit in Übereinstimmung mit dem Bewegungsgeschwindigkeitssignal, welches von dem Bewegungsgeschwindigkeitserfassungsmittel (64) einzugeben ist, und einen Entscheidungsabschnitt (66) zum Vergleichen des Signals der physikalischen Bewegung, welches von dem Eigenschaftserfassungsmittel (28) zum Erfassen der Eigenschaften einer physikalischen Bewegung einzugeben ist, mit dem gesetzten Wert, um somit zu entscheiden, daß ein menschlicher Körper anwesend an.

15. Anwesenheitserfassungsvorrichtung nach Anspruch 1,
dadurch gekennzeichnet, daß das Eigenschaftserfassungsmittel (28) zum Erfassen der Eigenschaften einer physikalischen Bewegung mit einer Vielzahl von Filtern (67, 68) versehen ist, zum Filtern einer bestimmten Frequenzkomponente des entsprechenden Ausgangssignals des entsprechenden Vibrationssensors (9), und wobei das Anwesenheitsentscheidungsmittel (33) entscheidet, ob oder ob nicht ein menschlicher Körper vorhanden ist, durch Vergleichen der Ausgangssignale der Filter (67, 68).

16. Sicherheitskontrollvorrichtung zum Gebrauch in Verbindung mit der Anwesenheitserfassungsvorrichtung gemäß Anspruch 1,
gekennzeichnet durch Entscheidungsmittel (75) zum Beurteilen des physiologischen, mentalen Zustands, wie etwa des Erregungsniveaus, des Anspannungsgrades oder dergleichen, eines menschlichen Körpers in Übereinstimmung mit dem Signal der physikalischen Bewegung, welches von dem Eigenschaftserfassungsmittel (28) zur Erfassung der Eigenschaft einer physikalischen Bewegung einzugeben ist, ein Kontrollmittel (42) mit einem Timer (76), welches aktiviert wird, wenn das Entscheidungssignal des physiologischen, mentalen Zustands, welches von dem Entscheidungsmittel (75) zur Beurteilung des physiologischen, mentalen Zustands einzugeben ist, über einen vorbestimmtem Bereich liegt, mit einem Anwesenheitssignal, welches von dem Anwesenheitsentscheidungsmittel (33) einzugeben ist, einen Fahrkontrollabschnitt (77) zum Stoppen der Fahrbewegung des Fahrzeuges, wenn das Taktsignal des Timers (76) einer vorbestimmten festen Zeit entspricht oder diese übersteigt, ein Warnungserzeugungsmittel (43) zum Erzeugen einer Warnung durch Betreiben des Timers (76).

17. Sicherheitskontrollvorrichtung nach Anspruch 16,
dadurch gekennzeichnet, daR Entscheidungsmittel (75) zum Beurteilen eines physiologischen, mentalen Zustands mit einem Timer (73) versehen ist, welcher betrieben wird, wenn ein Signal einer physikalischen Bewegung, welches von dem Eigenschaftserfassungsmittel (28) zum Erfassen der Eigenschaft einer physikalischen Bewegung einzugeben ist, einem vorbestimmten, gesetzten Wert entspricht oder diesen übersteigt, einem Erregungsniveauentscheidungsabschnitt (76) zum Beurteilen eines Erregungsniveaus einer anwesenden Person in Übereinstimmung mit dem Taktsignal, welches von dem Timer (73) einzugeben ist.

18. Sicherheitskontrollvorrichtung nach Anspruch 16,
dadurch gekennzeichnet, daß das Entscheidungsmittel (75) zum Beurteilen des physiologischen, mentalen Zustands mit einem Herzschlagerfassungsabschnitt versehen ist, zum Erfassen des Herzschlages einer anwesenden Person in Übereinstimmung mit dem Signal der physikalischen Bewegung, welches von dem Eigenschaftserfassungsmittel (28) zum Erfassen der Eigenschaften einer physikalischen Bewegung einzugeben ist, und einem Erregungszustandentscheidungsabschnitt (74) zum Beurteilen eines Erregungszustandes in Übereinstimmung mit dem Herzschlagsignal, welches von dem Herzschlagerfassungsabschnitt einzugeben ist.

19. Sicherheitskontrollvorrichtung nach Anspruch 16,
dadurch gekennzeichnet, daR das Entscheidungsmittel (75) zum Beurteilen eines physiologischen, mentalen Zustandes mit einem Berechnungsabschnitt versehen ist, zum Ausführen einer Frequenzanalyse der Signale der physikalischen Bewegung, welche von dem Eigenschaftserfassungsmittel (28) zum Erfassen der Eigenschaften einer physikalischen Bewegung einzugeben sind, und einem Anspannungsgradentscheidungsabschnitt zum Beurteilen der mentalen und physischen Anspannungsgrade einer anwesenden Person in Übereinstimmung mit dem Frequenzanalysesignal, welches von dem Berechnungsabschnitt einzugeben ist.

## Revendications

1. Appareil de détection de présence d'un véhicule comprenant :
un moyen de détection de caractéristiques de mouvement physique (28) destiné à détecter les caractéristiques du mouvement physique d'un corps humain sur le siège conformément aux signes de vie du corps humain, avec un signal provenant d'un capteur de vibration (9) disposé dans le siège du véhicule, et
un moyen de définition de présence (33) destiné à évaluer si le corps humain est ou non présent sur le siège en établissant une discrimination entre la personne et un autre objet conformément aux caractéristiques de fréquence détectées grâce au moyen de détection de caractéristiques de mouvement physique (28).

2. Appareil de commande de sécurité destiné à être utilisé en conjonction avec l'appareil de détection de présence selon la revendication 1, comprenant :
un moyen de réservation de siège (35) destiné à établir des réservations de sièges, le moyen de commande (42) comparant un signal de réservation de siège qui doit être entré à partir du moyen de réservation de siège (35), à un signal de présence qui doit être entré à partir du moyen de définition de présence (33) de façon à contrôler la condition de conduite du véhicule.

3. Appareil de commande de sécurité destiné à être utilisé en conjonction avec l'appareil de détection de présence selon la revendication 1,
comprenant un moyen de détection de ceinture de siège (40) destiné à détecter l'encliquetage d'une ceinture de siège (41), et un moyen de génération de signalisation (43), le moyen de commande (42) commandant la condition de conduite du moyen de génération de signalisation (43) et du moyen de propulsion (7) conformément à un signal de présence devant être entré à partir du moyen de définition de présence (33), et un signal d'encliquetage de ceinture de siège devant être entré à partir du moyen de détection de ceinture de siège (40).

4. Appareil de détection de présence selon la revendication 1, dans lequel le capteur de vibration (9) est composé d'un matériau piézoélectrique (10), d'une électrode (11, 12) prévue sur les deux faces du matériau piézoélectrique (10), d'une partie de borne de connexion (14, 15) qui est connectée à l'électrode (11, 12) de façon à acheminer le signal de sortie de l'électrode (11, 12).

5. Appareil de détection de présence selon la revendication 4, dans lequel le capteur de vibration (9) comporte une partie de conversion d'impédance (16) reliée de façon contigue à une partie de borne de connexion (14).

6. Appareil de commande de sécurité selon la revendication 2 ou 3 ou 5, dans lequel le capteur de vibration (9) comporte une partie blindée (18) sur son bloc extérieur.

7. Appareil de détection de présence selon la revendication 1, dans lequel le capteur de vibration (9) est muni d'un matériau piézoélectrique (10), d'une électrode (11, 12) prévue sur les deux faces du matériau piézoélectrique (10), d'une partie de borne de connexion (14, 15) qui est connectée à l'électrode (11, 12) de façon à acheminer le signal de sortie de l'électrode (11, 12) et d'une première résistance (17) reliée entre les électrodes (11, 12), et comprenant en outre une seconde résistance (20) reliée à l'une des électrodes, un moyen de détection d'anomalie (34) destiné à détecter l'anomalie du capteur de vibration (9) conformément à la valeur de tension divisée par la première résistance (17) et la seconde résistance (20).

8. Appareil de détection de présence selon la revendication 1, dans lequel le capteur de vibration (9) comporte un matériau piézoélectrique (44), une électrode (45, 46) prévue sur les deux faces du matériau piézoélectrique (44), une partie de bornes de connexion (47 à 50), prévue des deux côtés des électrodes (45, 46), et comprenant en outre un moyen de détection d'anomalie (51) destiné à évaluer l'anomalie du capteur de vibration (9) grâce à la détection de la valeur ohmique entre les parties de bornes de connexion (47 à 50).

9. Appareil de détection de présence selon la revendication 1, comprenant en outre un moyen d'application de vibrations (52) destiné à appliquer des vibrations sur un capteur de vibration (9), un moyen de détection d'anomalie (53) destiné à détecter l'anomalie du capteur de vibration suivant le signal de sortie provenant du moyen de détection de caractéristiques de mouvement physique (28) au moment où les vibrations sont appliquées par le moyen d'application de vibrations (52).

10. Appareil de détection de présence selon la revendication 1, comprenant en outre un moyen d'entrée de signal de référence (56) destiné à entrer le signal de référence prédéterminé vers le moyen de détection de caractéristiques de mouvement physique (28), un moyen de détection d'anomalie (57) destiné à détecter l'anomalie du moyen de détection de caractéristiques de mouvement physique (28) conformément au signal de sortie du moyen de détection de caractéristiques de mouvement physique (28) au moment où le signal de référence a été entré.

11. Appareil de détection de présence selon la revendication 1, dans lequel le moyen de détection de caractéristiques de mouvement physique (28) comprend un filtre (29) destiné à ne filtrer qu'une composante de fréquence particulière parmi les signaux de sortie du capteur de vibration (9), une partie d'amplification (30) destinée à amplifier le signal de sortie du filtre (29) et une partie de lissage (31) destinée à lisser les signaux de sortie de la partie d'amplification (30).

12. Appareil de détection de présence selon la revendication 1, dans lequel le moyen de définition de présence (33) est muni d'un temporisateur devant être mis en oeuvre si le signal de mouvement physique devant être entré à partir du moyen de détection de caractéristiques de mouvement physique est à une valeur établie prédéterminée ou plus, et une partie de définition qui évalue une présence si un signal de cadencement devant être entré à partir du temporisateur correspond à un certain intervalle de temps constant ou plus, et évalue une absence si ce n'est pas le cas.

13. Appareil de détection de présence selon la revendication 1, dans lequel le moyen de définition de présence (33) est composé d'une première partie de décision (62) destinée à évaluer qu'un corps humain est présent si le signal de mouvement physique devant être entré à partir du moyen de détection de caractéristiques de mouvement physique (28) est à une première valeur établie prédéterminée ou plus, et à évaluer qu'un corps humain est absent s'il est inférieur à la première valeur, et une seconde partie de décision (63) conserve la décision de l'absence avant que le signal de mouvement physique prenne la seconde valeur établie prédéterminée ou plus si l'évaluation de l'absence est effectuée par la première partie de décision (62) et évalue si un corps humain est présent ou non conformément à la première partie de décision (62) lorsque le signal de mouvement physique prend la seconde valeur établie ou plus.

14. Appareil de détection de présence selon la revendication 1, dans lequel ledit moyen de définition de présence (33) est constitué d'un moyen de détection de vitesse de circulation (64) destiné à détecter la vitesse de circulation du véhicule mobile, d'une partie de calcul (65) destinée à calculer une valeur établie pour l'évaluation de la présence conformément au signal de vitesse de circulation devant être entré à partir du moyen de détection de vitesse de circulation (64), une partie de décision (66) destinée à comparer le signal de mouvement physique devant être entré à partir du moyen de détection de caractéristiques de mouvement physique (28) avec la valeur établie de façon à définir qu'un corps humain est présent.

15. Appareil de détection de présence selon la revendication 1, dans lequel le moyen de détection de caractéristiques de mouvement physique (28) est muni d'une pluralité de filtres (67, 68) destinés à filtrer une composante de fréquence particulière des signaux de sortie respectifs du capteur de vibration (9), respectivement, et le moyen de définition de présence (33) évalue si un corps humain est présent ou non en comparant les signaux de sortie des filtres (67, 68).

16. Appareil de commande de sécurité destiné à être utilisé en liaison avec l'appareil de détection de présence selon la revendication 1, comprenant en outre un moyen de définition d'état mental physiologique (75), destiné à évaluer l'état mental physiologique, tel qu'un niveau d'éveil, un degré de tension ou analogues d'un corps humain conformément au signal de mouvement physique devant être entré à partir du moyen de détection de caractéristiques de mouvement physique (28), un moyen de commande (42) comportant un temporisateur (76) devant être mis en oeuvre si le signal de définition d'état mental physiologique devant être entré à partir du moyen de définition d'état mental physiologique (75) est au-delà d'une plage établie prédéterminée, un signal de présence étant entré à partir du moyen de définition de présence (33), une partie de commande de conduite (77) destinée à arrêter l'opération de conduite du véhicule si le signal de cadencement du temporisateur (76) est un intervalle de temps établi prédéterminé ou plus, et un moyen de génération de signalisation (43) destiné à générer une signalisation grâce au fonctionnement du temporisateur (76).

17. Appareil de commande de sécurité selon la revendication 16, dans lequel le moyen de définition d'état mental physiologique (75) est muni d'un temporisateur (73) devant être mis en oeuvre si un signal de mouvement physique devant être entré à partir du moyen de détection de caractéristiques de mouvement physique (28) est à une valeur établie prédéterminée ou plus, une partie de définition de niveau d'éveil (74) destinée à définir un niveau d'éveil d'une personne présente conformément au signal de cadencement devant être entré à partir du temporisateur (73).

18. Appareil de commande de sécurité selon la revendication 16, dans lequel le moyen de définition d'état mental physiologique (75) est muni d'une partie de détection de battements de coeur destinée à détecter les battements de coeur d'une personne présente conformément au signal de mouvement physique devant être entré à partir du moyen de détection de caractéristiques de mouvement physique (28), d'une partie de définition de niveau d'éveil (74) destinée à évaluer un niveau d'éveil conformément au signal de battements de coeur devant être entré à partir de la partie de détection de battements de coeur.

19. Appareil de commande de sécurité selon la revendication 16, dans lequel le moyen de définition d'état mental physiologique (75) est muni d'une partie de calcul destinée à effectuer l'analyse en fréquence des signaux de mouvement physique devant être entrés à partir du moyen de détection de caractéristiques de mouvement physique (28), et une partie de définition de degré de tension destinée à évaluer le degré de tension mentale et physique d'une personne présente conformément au signal d'analyse en fréquence devant être entré à partir de la partie de calcul.
